# EUROPÄISCHE PATENTSCHRIFT

(11) **EP 4 355 617 B1**
(45) Veröffentlichungstag und Bekanntmachung des Hinweises auf die Patenterteilung: **10.09.2025**
(21) Anmeldenummer: 22732530.5
(22) Anmeldetag: 10.06.2022
(51) Int. Cl.: B60P 7/13, B63B 25/28

(54) **LASCHELEMENT UND LASCHSYSTEM ZUM LASCHEN VON CONTAINERN**
LASHING ELEMENT AND LASHING SYSTEM FOR LASHING CONTAINERS
ÉLÉMENT D'ARRIMAGE ET SYSTÈME D'ARRIMAGE POUR L'ARRIMAGE DE CONTENEURS

(30) Priorität: 18.06.2021 DE 102021115908; 28.10.2021 DE 102021128216
(43) Veröffentlichungstag der Anmeldung: 24.04.2024
(73) Patentinhaber: Behr, Peter, 22393 Hamburg (DE); Behr, Daniel, 20251 Hamburg (DE)
(72) Erfinder: Behr, Peter, 22393 Hamburg (DE); Behr, Daniel, 20251 Hamburg (DE)
(74) Vertreter: Klickow & Wetzel PartGmbB
(86) Internationale Anmeldenummer: PCT/EP2022/065816
(87) Internationale Veröffentlichungsnummer: WO 2022/263313

(56) Entgegenhaltungen:
- DE-U1- 202013 101 779
- GB-A- 2 105 265
- KR-A- 20210 027 794
- SE-C2- 526 007

## Beschreibung

Die Erfindung betrifft Laschelement zum vertikalen Verbinden eines Containers oder eines Stapels von wenigstens zwei übereinander angeordneten Containern mit einem Anschlag auf einer Oberfläche, insbesondere an Bord eines Schiffes, mit wenigstens einem Element zum Herstellen einer lösbaren beweglichen Verbindung mit dem Anschlag, mit wenigstens einem Element zum Herstellen eine lösbaren Verbindung mit einem Eckbeschlag des Containers, mit wenigstens einem Element zum Ändern einer Länge des Laschelements (zum Anpassen der Länge des Laschelements und zum Spannen des Laschelements zwischen der Containerecke und dem Anschlag, und ein Laschsystem zum vertikalen Sichern eines Containers oder eines Stapels von wenigstens zwei übereinander angeordneten Containern mit einem Anschlag, insbesondere an Bord eines Schiffes.

Heutige Großcontainerschiffe - sogenannte Pan Max und Post Pan Max Containerschiffe - haben mit einer Länge von bis zu 400 m, einer Breite bis zu 61 m und eine Tragfähigkeit von bis zu 220.000t Stellplätze für 24.000 TEU Container. Davon sind ca. 14 bis 15.000 Container an Deck gestaut, bis zu 12 Lagen übereinander und auf fast der gesamten Schiffslänge und der vollen Schiffsbreite. Diese Schiffe sind auf größtmögliche Stauung von Containern an Deck und auf maximale Geschwindigkeit konstruiert. Da es bei der Ladung überwiegend um Volumengüter handelt, also leichte Waren, ist das Unterwasserschiff auf Geschwindigkeit und geringen Widerstand konzipiert. Diese schlanken Unterwasserschiffe erlauben auch auf Grund ihrer hohen Maschinenleistung eine höhere Geschwindigkeit in Schlechtwetterzonen, was wiederum zu höheren Beanspruchungen der Schiffskonstruktion und den Containern, einschließlich ihrer Ladungssicherungssystemen führt.

Derartige Schiffe sind beispielsweise mit mehrstöckigen Laschbrücken ausgestattet, von deren Ebenen aus die bis zu 12 Lagen Container mit Laschmaterial gesichert werden können. Dabei wird jeder Stapel für sich mittels einer kreuzweise angeordneten Laschung in den Containerecken gesichert. Weiterhin sind die Container untereinander in jedem Stapel durch Twistlocks an den 4 Containerecken miteinander verriegelt. Mit Hilfe dieser Sicherung ist somit jeder Stapel an Deck ausreichend gesichert, um alle bisher möglichen Seegangsbewegungen des Schiffes wie Rollen, Stampfen und Tauchen schadlos zu überstehen.

Auf Grund der besonderen Konstruktion dieser Schiffstypen kommt es in den letzten Jahren häufiger zu sogenannten Seeunfällen, bei denen diese Schiffe beim Durchfahren von Schlechtwetterzonen mit entsprechend hohen Wellen, einem bis dahin nicht bekanntem Phänomen unterliegen, dem sogenannten parametrischem Rollen. In diesen Fällen geraten die Schiffe bei entsprechendem Seegang (Wellenhöhe, Wellenlänge und Wellenfrequenz) und der dazu passenden Begegnungsrichtung des Schiffs zu den Wellen sowie der Schiffsgeschwindigkeit in unerwartete heftige Rollbewegungen, die mit großen Rollwinkeln nach beiden Seiten bis zu 40 Grad und großen Rollbeschleunigungen auftreten.

Diese kurzzeitige Extrembelastung führen zu sehr hohen Querbelastungen auf jeden einzelnen Containerstapel und in der Folge werden dabei einzelne Containerstapel überlastet, wodurch sie zusammenbrechen und zur Seite fallen. Dabei werden die benachbarten Containerstapel mit umgerissen. Dieses setzt sich dann bis nach außen hin fort und einige der Container stürzen ins Meer.

Die Ursache für die Häufung dieser Seeunfälle liegt darin begründet, dass sowohl die Container als auch die Ladungssicherung nicht für diese Extrembelastungen konzipiert sind. Bedingt durch den Klimawandel werden in Zukunft diese extremen Wetterbedingungen zunehmend häufiger auftreten. Dabei ist nicht auszuschließen, dass sich derartige Unfälle mit großen Verlusten mehren.

Die Schifffahrt ist zusätzlich dadurch gefährdet, dass einige der über Bord gefallenen Container an der Wasseroberfläche schwimmen oder schweben und Kollisionen nicht auszuschließen sind. Des Weiteren sind darunter auch Container mit gefährlichen Gütern, die die Umwelt erheblich belasten.

Umfangreiche Recherchen haben gezeigt, dass in derartigen Situationen die Container selbst überlastet werden. Das ist an den immer wieder fast gleichen Schadensbildern zu erkennen. Ursächlich liegt das in den zurzeit üblichen Sicherungssystemen begründet. Die Container werden untereinander an ihren vier Eckbeschlägen mit Twistlocks untereinander verriegelt und bilden so einen Stapel, der bis zu zwölf Lagen hoch sein kann.

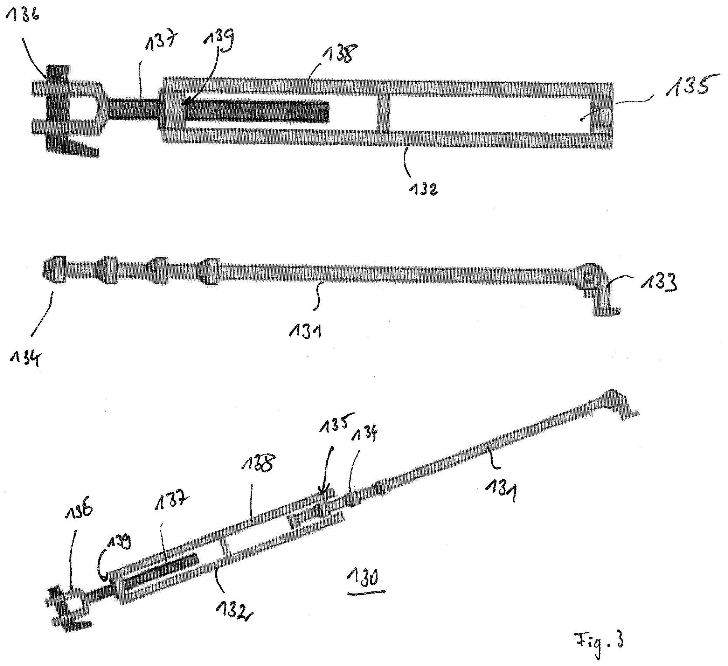

Um diese sehr hohen Containerstapel vor allen Dingen beim Rollen des Schiffes gegen Kippen zu sichern, sind sogenannte Laschbrücken zwischen den jeweiligen Luken vorgesehen, die teilweise bis zu fünf Containerlagen hoch sind. Von diesen Laschbrücken aus werden dann die Container mit einem bisher üblichen Laschsystem kreuzweise gesichert. Gewöhnlich besteht diese Laschung aus einem Laschelement 130 aus einer Spannschraube 132 und einer Laschstange 131. Die Laschstange 131 weist an einem Ende einen Haken 133 auf, der in einen Eckbeschlag 120 eines Container 100 eingreift. Das andere Ende weist wenigstens einen Vorsprung 134 auf, der lose in eine korrespondierende Öffnung 135 an einem Ende der Spannschraube 132 eingelegt wird. Das andere Ende der Spannschraube 132 weist ein Verbindungsmittel 136 zum Herstellen einer lösbaren und beweglichen Verbindung mit einem Anschlag 140 an Deck 150 oder einer Laschbrücke auf (siehe Fig. 3). Das Verbindungsmittel 136 weist einen Gewindeteil 137 auf, der in ein Gewinde 139 eines Drehelements 138 der Spannschraube 132 zur Längenänderung einschraubbar ist. Die Spannschraube 132 wird üblicherweise handfest vorgespannt. Jeweils zwei oder auch vier Spannschrauben bilden dann die Sicherung nach beiden Seiten. Ein solches Laschelement ist auch in DE 20 2013 101 779 U1 offenbart.

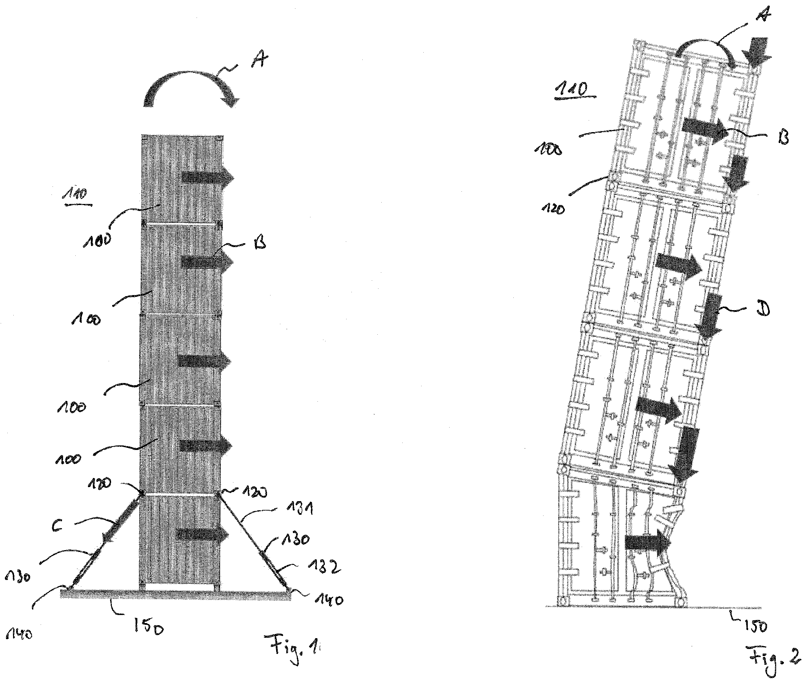

Es gibt grundsätzlich zwei Laschsysteme, die schon seit sehr langer Zeit verwendet werden. Einmal die sogenannte "interne Laschung". Dabei greift der obere Beschlag (Haken 133) der Laschstange 131 in einen Containerbeschlag 120 eines direkt im Bereich der Anschlagspunkte befindlichen Containers 100 eines Containerstapels 110 ein. Bei der "externen Laschung" (siehe Fig. 1) greift der Beschlag 133 in einen Containerbeschlag 120 des jeweils benachbarten Containerstapel 110 rechts oder links ein.

Jeder mehrstöckige Stapel 110 aus Containern 100 (siehe Fig. 1) steht für sich selbst und ist entsprechend gegen Kippen und Abheben gesichert. Rollt das Schiff z. B. zur Steuerbordseite in Pfeilrichtung A (nach rechts), so wird am Beispiel einer externen Laschung die Laschung, die in einen linken Containereckbeschlag 120 greift auf Zug in Pfeilrichtung C beansprucht und die Laschung 130 bestehend aus einer Laschstange 131 mit Spannschraube 132 gemäß Stand der Technik, die in einen rechten Containereckbeschlag 120 greift, wird nicht beansprucht, da sich der Container 100 auf Grund der Belastung nach rechts in Pfeilrichtung B bewegen will und entsprechend verformt. Durch die Bewegung/Verformung des Containers 100 dehnt sich die linke diagonale gesetzte Laschung 130 mit, während die rechte Laschung 130 lose fällt, siehe Fig. 1.

Der Containerrahmen bildet ein Parallelogramm. Die Wandseite des Containers ist durch ihre wesentlich höhere Steifigkeit im Vergleich zur Türseite sehr hoch belastet. Beispielsweise ist die Türseite mehr als 4-mal weicher als die Wandseite und bei extremen Wetterbedingungen führt das zum kompletten Kollabieren der Wandseite. Entsprechend nimmt die Laschung auf der Türseite wesentlich mehr Kräfte auf, als die Laschung auf der geschlossenen Wandseite. Containerrahmen und die Laschung bilden ein System und verformen sich in Kraftrichtung. Dazu wird die Laschstange mit Spannschraube durch die Zugkraft gedehnt. Wird nun die Beanspruchung infolge zu hoher Druckkräfte in Pfeilrichtung D auf die Endrahmen des Containers zu hoch, so knickt dieser ein und der gesamte Containerstapel 110 kippt zur Seite, wie in Fig. 2 dargestellt ist.

SE526007C2 und WO2005032929A1 offenbaren eine Vorrichtung zum horizontalen Verzurren von ISO-Containern, die ein erstes Verriegelungsmittel, das an einer Zurrbrücke/Laschbrücke befestigt werden kann, ein zweites Verriegelungsmittel, das an einem Eckbeschlag eines Containers befestigt werden kann, und ein Stangenelement, das zwischen dem ersten Verriegelungsmittel und dem zweiten Verriegelungsmittel angeordnet ist, umfasst, wobei das Stangenelement Druck- und Zuglasten im Wesentlichen horizontal von den ISO-Containern aufnehmen kann.

Es hat sich somit gezeigt, dass die heutigen Containerladungssicherungssysteme reine Zugsysteme sind, die für Deckscontainer nur einseitig tragen. Die Container werden nur immer an einem Eckbeschlag belastet, an dem dann ein Versagen auftritt, oder die gesamte Druckkraft aus einem Kippmoment eines Stapels immer nur von einem Eckpfosten an der Wand- oder Türseite aufgenommen wird.

Aufgabe der Erfindung ist es, ein Laschsystem bereit zu stellen, mit dem die Wahrscheinlichkeit des Versagens der Containerstapel bei den zuvor genannten Bedingungen reduziert/vermieden wird.

Diese Aufgabe wird dadurch gelöst, dass zwischen dem wenigstens einen Element zum Herstellen einer lösbaren beweglichen Verbindung mit dem Anschlag und dem wenigstens einen Element zum Herstellen einer lösbaren Verbindung mit einem Eckbeschlag des Containers eine druck- und zugfeste Verbindung besteht, dass es sich bei dem wenigstens einen Element zum Herstellen einer lösbaren Verbindung mit einem Eckbeschlag des Containers um einen Laschbeschlag handelt, dass der Laschbeschlag einen Drehkopf aufweist, der beweglich, um eine Drehachse verschwenkbar, gegenüber einem Stangenabschnitt der Laschstange angeordnet ist, dass der Laschbeschlag ein drehbares Konuselement zum Eingreifen in eine Öffnung des Eckbeschlags des Containers zum Herstellen einer formschlüssigen Verbindung aufweist, wobei das Konuselement drehbar am Drehkopf angeordnet ist, dass der Laschbeschlag ein Einsatzelement aufweist, das in die Öffnung des Eckbeschlags des Containers einsetzbar ist, dass das Einsatzelement die Dimension der Öffnung des Eckbeschlags des Containers aufweist, so dass nach dem Einsetzen des Einsatzelements in die Öffnung eine formschlüssige Verbindung in der Ebene der Öffnung vorliegt, und dass das Einsatzelement zwischen dem Konuselement und dem Drehkopf angeordnet ist.

Durch das Sichern mit den erfindungsgemäßen Laschelementen hat sich überraschend gezeigt, dass eine Lastverteilung in den Containern bedingt durch die Möglichkeit der Ableitung der Belastungen durch die Aufnahme von Zug- und Druckkräften erreicht werden kann, die die Lasten erheblich reduziert. Hierdurch werden insbesondere die Auswirkungen durch das parametrische Rollen gemindert, so dass das Versagen der Container in solchen Bedingungen entsprechend verringert/vermieden wird. Bezogen auf die Steifigkeitsunterschiede zwischen Türseite und Wandseite bewirkt das erfindungsgemäße Laschsystem mit Druck- und Zug Laschung und der daraus resultierenden höheren Steifigkeit einen Entlastung der Wandseite bei Belastung. Weiterhin wird es auf einfache Weise möglich, eine sichere Verbindung bereitzustellen, die Sowohl Druckwie Zugkräfte aufnehmen kann. Weiterhin ist es auf einfach Weise möglich, die den notwendigen Winkel der Anordnung für das Konuselement in Abhängigkeit der Höhe des jeweiligen Eckbeschlags des Containers zum Anschlag bereitzustellen. Auch wird ein Bewegen des Beschlagelements relativ zum Eckbeschlag des Containers in Bezug auf die durch den Seegang hervorgerufenen Bewegungen der Container/Containerstapel vermieden, so dass die auftretenden Zug- und Druckkräfte sicher abgeleitet werden können. Weiterhin kann auf einfach Weise eine sichere, schnelle Ver- und Entriegelung im Eckbeschlag erreicht werden, die gleichzeitig eine sichere formschlüssige Verriegelung des Laschelements in der Ebene der Öffnung erreicht.

Eine weitere Lehre der Erfindung sieht vor, dass es sich bei wenigstens einem Element zum Ändern einer Länge des Laschelements um ein Schraubelement, bevorzugt um eine Spannschraube handelt. Eine weitere Lehre der Erfindung sieht vor, dass das Schraubelement wenigstens eine Öffnung, bevorzugt zwei Öffnungen, aufweist, die mit einem Gewinde versehen ist, in das ein Gewindeabschnitt einer Laschstange oder einer Verbindungsstange ein- und ausschraubbar ist. Hierdurch kann auf einfache Weise eine notwendige Längenanpassung des Laschelements erreicht werden. Weiterhin kann auf einfache Weise ein Spannen/Vorspannnen der Laschelemente bewirkt werden.

Bevorzugt weist die Spannschraube eine Rohrhülse mit jeweils angeschweißten Gewindeteilen an den Enden auf, wobei besonders bevorzugt eines mit Rechtsgewinde und das andere mit Linksgewinde versehen ist. Dieses erlaubt durch Drehung an der Rohrhülse mittels Maulschlüssen einer Ratsche eine optimale Längenänderung auf einfache Weise.

Eine weitere Lehre der Erfindung sieht vor, dass es sich bei dem wenigstens einen Element zum Herstellen einer lösbaren beweglichen Verbindung mit dem Anschlag um ein Kugelelement oder eine Aufnahme für ein Kugelelement handelt. Diese Möglichkeit der Verbbindung ermöglicht ein Bewegen in alle Richtungen. Gleichzeitig können sowohl Druck- wie Zugkräfte sicher aufgenommen werden, ohne die Verbindung zu überlasten.

Eine weitere Lehre der Erfindung sieht vor, dass das Laschelement einen Gewindestangenabschnitt und eine Laschstangenabschnitt aufweist, die lösbar miteinander verbunden sind. Dabei ist vorteilhaft, dass die Verbindung zwischen Gewindestangenabschnitt und eine Laschstangenabschnitt so ausgeführt ist, dass über die Verbindung Druck- und Zugkräfte übertragbar sind. Hierdurch ist es auf einfache Weise möglich unterschiedlich lange Laschstangenabschnitte zum Ausgleichen unterschiedlicher Containerhöhen bereitzustellen.

Dabei ist weiterhin vorteilhaft, dass das Gewindestangenabschnitt eine Aufnahme für ein Verbindungselement des Laschstangenabschnitts, bevorzugt ein Vorsprung am hinteren Ende des Laschstangenabschnitts, aufweist. Es hat sich gezeigt, dass hierdurch ein sicheres Übertragen der Zug- und Druckkräfte möglich ist, trotz der Tatsache, dass eine Trennung zum Verwenden von unterschiedlich langen Laschstangenabschnitten zur Anwendung kommt.

Dabei ist vorteilhaft, dass die Aufnahme gegenüber dem Verbindungselement mit einem Verriegelungselement verriegelbar ist. Hierdurch wird auf einfache Weise eine sichere Verbindung auch unter Seegangsbelastungen bewirkt.

Weiterhin wird die erfindungsgemäße Aufgabe gelöst durch ein Laschsystem zum vertikalen Sichern eines Containers oder eines Stapels von wenigstens zwei übereinander angeordneten Containern mit einem Anschlag, insbesondere an Bord eines Schiffes, mit wenigstens zwei zuvor beschriebenen Laschelementen und wenigstens zwei Anschlägen auf wenigstens einer Oberfläche wie beispielsweise einem Deck, einem Lukendeckel oder einer Laschbrücke.

Eine weitere Lehre der Erfindung sieht vor, dass wenigstens einer der zwei Anschläge auf wenigstens einem Podest auf der wenigstens einen Oberfläche vorgesehen ist.

Eine weitere Lehre der Erfindung sieht vor, dass der wenigstens eine Anschlag auf dem Podest verschiebbar angeordnet ist.

Eine weitere Lehre der Erfindung sieht vor, dass die Laschelemente ausgehend von den Anschlägen nach oben oder nach unten angeordnet sind.

Eine weitere Lehre der Erfindung sieht vor, dass die Anschläge mittig in Bezug auf den zu sichernden Container angeordnet sind, so dass bevorzugt die Laschelemente sich nicht kreuzend zwischen den Anschlägen und den Eckbeschlägen des Containers angeordnet sind.

Eine alternative Lehre der Erfindung sieht vor, dass die Anschläge außen in Bezug auf den zu sichernden Container angeordnet sind, so dass bevorzugt die Laschelemente sich kreuzend zwischen den Anschlägen und den Eckbeschlägen des Containers angeordnet sind.

Das erfindungsgemäße Laschsystem mit den erfindungsgemäßen Laschelementen ermöglicht überraschen auf einfache Weise ein Zug-Druck-Sicherungssystem für die Sicherung von Containerstapeln an Deck eines Containerschiffes.

Entsprechend den geforderten Stackgewichten und den Belastungen im Seegang auf Grund der schiffsspezifischen Daten werden die Container von einer oder zwei Ebenen aus mit dem neuen Laschsystem gesichert, beispielsweis an einer Laschbrücke oder an Deck.

Die an den Laschbrückenpfosten angebrachten Laschelemente Weise beispielsweise Spanschrauben auf. Je nach erforderlichen Längeneinstellungen wird die Spannschraube beispielsweise mittels Ratsche oder Maulschlüssel auf die notwendige Länge gebracht, um das Konuselement des Beschlagelements in die Öffnung der Containerecke einzubringen. Mittels eines kurzen Hebels, der beispielsweise mit Hilfe eines Aufsteckrohres verlängert werden kann, wird das Konuselement um 90 Grad gedreht, sodass das Beschlagelement sicher in der Containerecke sitzt.

Das untere Ende der Spannschraube des Laschelements wird an einem Fundament beispielsweise in Form eines Anschlags auf der Laschbrückenebene befestigt, welches beispielsweise ein kugelförmiges Lager aufweist oder ein kugelförmiges Element aufnehmen kann. An diesem Anschlag ist das untere Ende des Laschelements befestigt. Der Anschlag weist beispielsweise zwei Halbschalen auf, die auf der Innenseite ballig ausgeführt sind und um das fest installierte kugelförmige Lager greifen. Die Halbschalen werden mittels Schrauben fest miteinander verbunden und es können über diese Verbindung sowohl Zug- als auch Druckkräfte übertragen werden.

Die Zug-/Druckspannschraube ist beispielsweise für eine Bruchlast von 500 KN und für eine Safe Working Last von 250 KN ausgelegt. Die kritische Belastung wird die Druckbelastung sein und dementsprechend muss das Laschelement gegen Ausknicken dimensioniert sein.

Die maximale Laschelementlänge ergibt sich aus der Sicherung von max. 9 Fuß 6 Inch hohen Containern, gemessen von dem unteren Anschlagpunkt bis zur oberen Containerecke. Um die Länge des Laschelements schnell und einfach verstellen zu können, hat die Spannschraube an ihren beiden Enden jeweils eine angeschweißte Gewindehülse, beispielsweise mit einem linksdrehenden- und mit einem rechtsdrehenden Trapezgewinde. Das Gewinde ist so hergestellt, dass nur minimales Spiel im Gewinde vorhanden ist, um sowohl bei Druck- als auch bei Zugbelastung sofort kraftschlüssig aufnehmen zu können.

Die einzelnen Querschnitte der Laschelemente sind bevorzugt wesentlich größer als bei einer herkömmlichen Laschung. Damit ist das erfindungsgemäße Laschsystem sehr viel steifer. Diese höhere Steifigkeit stützt somit den Containerstapel stärker und gleichzeitig auch noch an zwei Anschlagpunkten, so dass damit eine Entlastung des Containers stattfindet.

Diese Zug-/Druckspannschrauben lassen sich neben der Nutzung für die Containerschifffahrt auch im Prinzip für alle möglichen anderen Transportsicherungen von schweren Lasten zu Wasser und zu Land einsetzen. Zum Beispiel ist der Einsatz bei Ro-Ro Schiffen möglich. Hier ist ein Container auf einem Trailer mit jeweils 10 Ketten und Kettenspannern in den dafür vorgesehenen Sockets im Deck des Schiffes befestigt. Mit dem Zug-/Druck Laschelement müssen nur insgesamt 4 Befestigungen an den jeweiligen Containerecken vorgesehen werden.

Nachfolgend wird die Erfindung anhand einer bevorzugten Ausführungsform in Verbindung mit einer Zeichnung näher erläutert. Dabei zeigen:
- Fig. 1: eine Seitenansicht eines Containerstapels mit einer externen Laschung gemäß Stand der Technik,
- Fig. 2: eine Seitenansicht eines beschädigten Containerstapels ohne Darstellung der Laschung gemäß Stand der Technik,
- Fig. 3: eine aus dem Stand der Technik bekannte Laschmittels mit ihren Einzelteilen,
- Fig. 4: eine erste Ausführungsform eines erfindungsgemäßen Laschmittels mit ihren Einzelteilen;
- Fig. 5: verschiedene Anschläge zum Anbringen der Laschung gemäß Fig. 4 an Deck oder an einer Laschbrücke,
- Fig. 6: eine erste Ausführungsform eines erfindungsgemäßen Laschsystems unter Verwendung des Laschmittels gemäß Fig. 4,
- Fig. 7: eine Seitenansicht zu Fig. 6,
- Fig. 8: eine Darstellung analog Fig. 1 mit einem Laschsystem gemäß Fig. 6,
- Fig. 9: eine Darstellung des Verriegelungsschritts eines Laschmittels gemäß Fig. 4 in einem Containereckbeschlag,
- Fig. 10: eine zweite Ausführungsform eines erfindungsgemäßen Laschmittels in räumlicher Draufsicht der Vorderseite (links) und in räumlicher Draufsicht der Rückseite (rechts),
- Fig. 11: eine räumliche Darstellung der Montageschritte eines Laschmittels gemäß Fig. 10,
- Fig. 12: eine dritte Ausführungsform eines erfindungsgemäßen Laschmittels in räumlicher Draufsicht der Vorderseite (links) und in räumlicher Draufsicht der Rückseite (rechts),
- Fig. 13a, 13b: eine räumliche Darstellung der Montageschritte eines Laschmittels gemäß Fig. 12,
- Fig. 14a bis 14d: eine räumliche Darstellung der Montageschritte der Laschmittel gemäß Fig. 10 und Fig. 12 an einem Anschlag,
- Fig.1 5a, 15b: eine räumliche Darstellung einer erfindungsgemäßen Laschstange in Draufsicht in verriegelter und entriegelter Stellung,

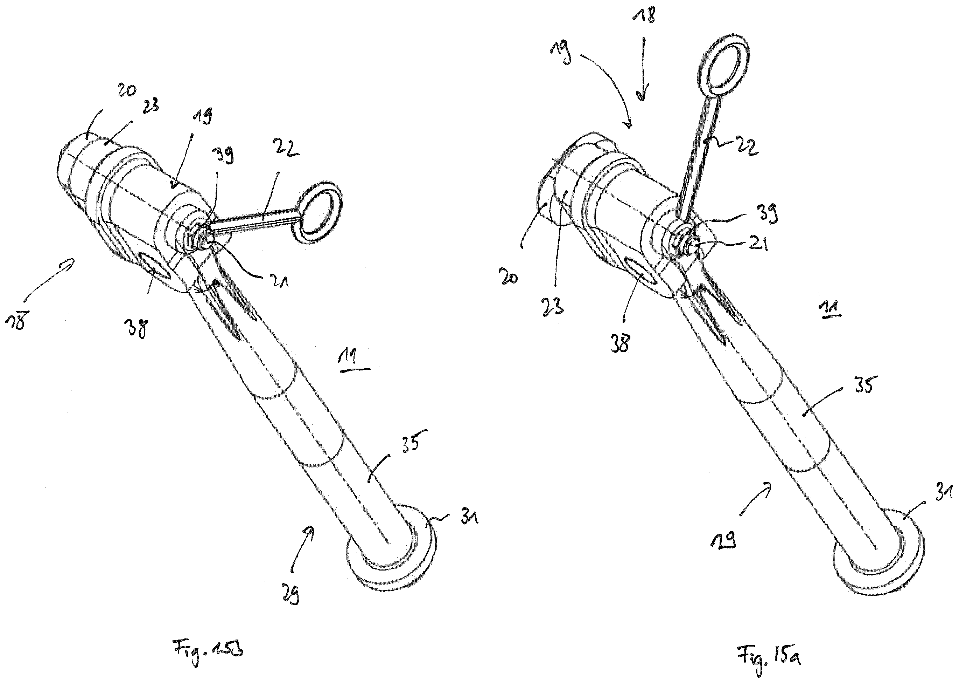

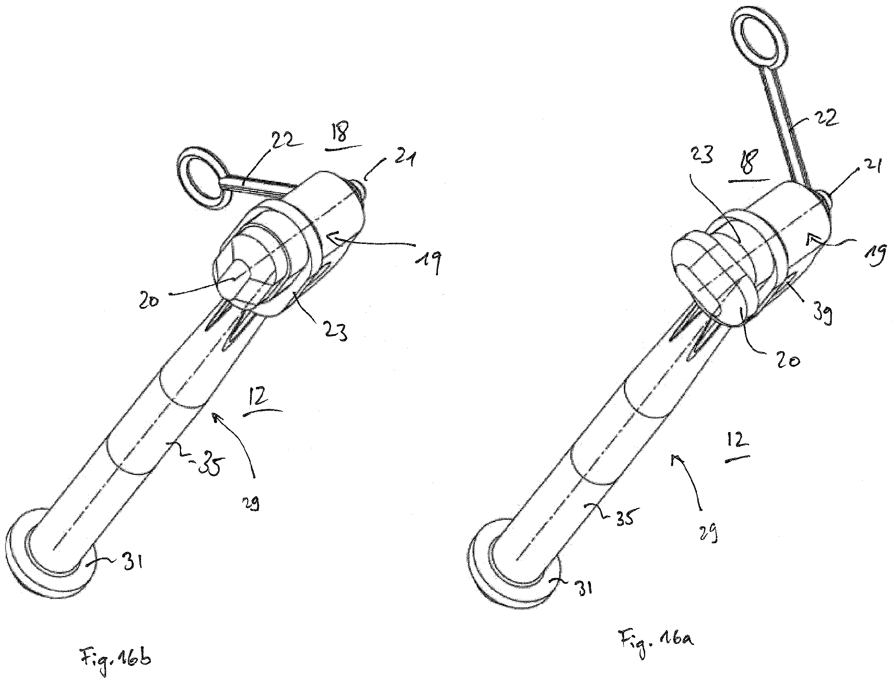

- Fig. 16a, 16b: eine räumliche Darstellung der erfindungsgemäßen Laschstange gemäß Fig. 15a, 15b in Rückansicht in verriegelter und entriegelter Stellung,

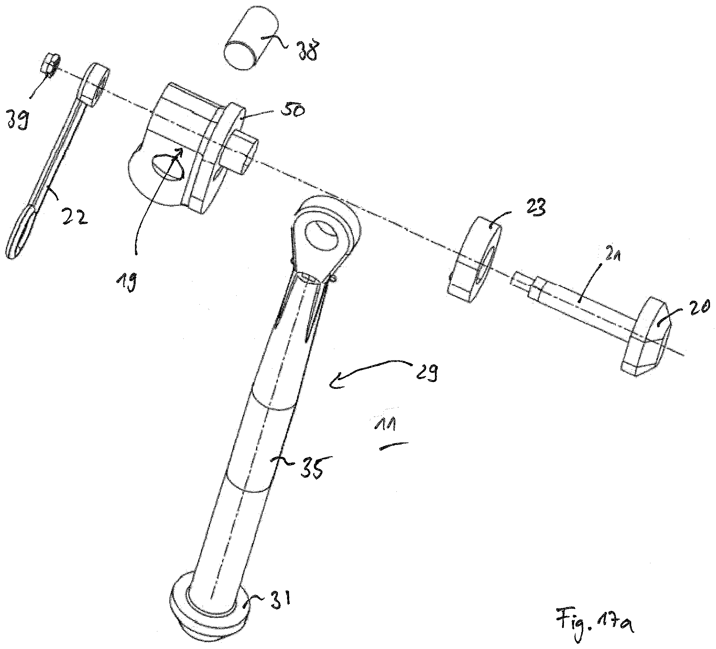

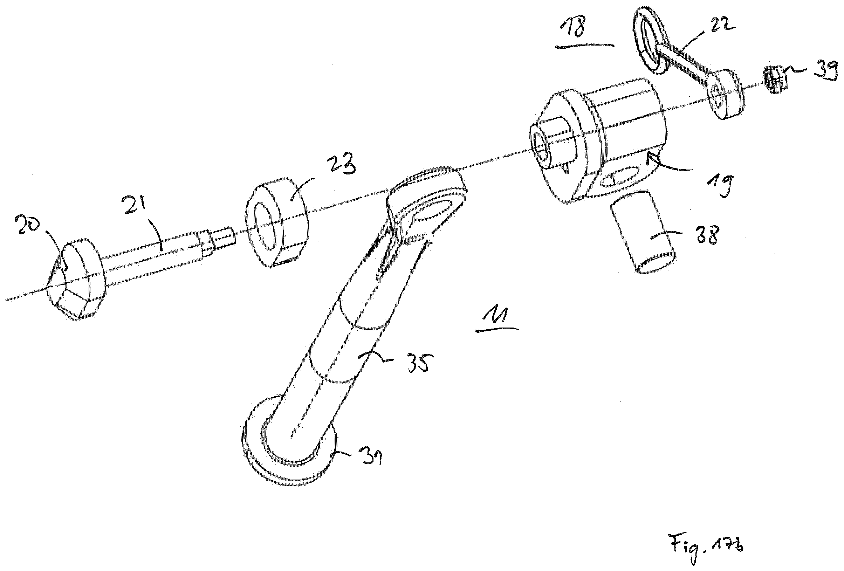

- Fig. 17a, 17b: eine räumliche Explosionsansicht der erfindungsgemäßen Laschstange gemäß Fig. 15a, 15b in Vorderansicht und Rückansicht,

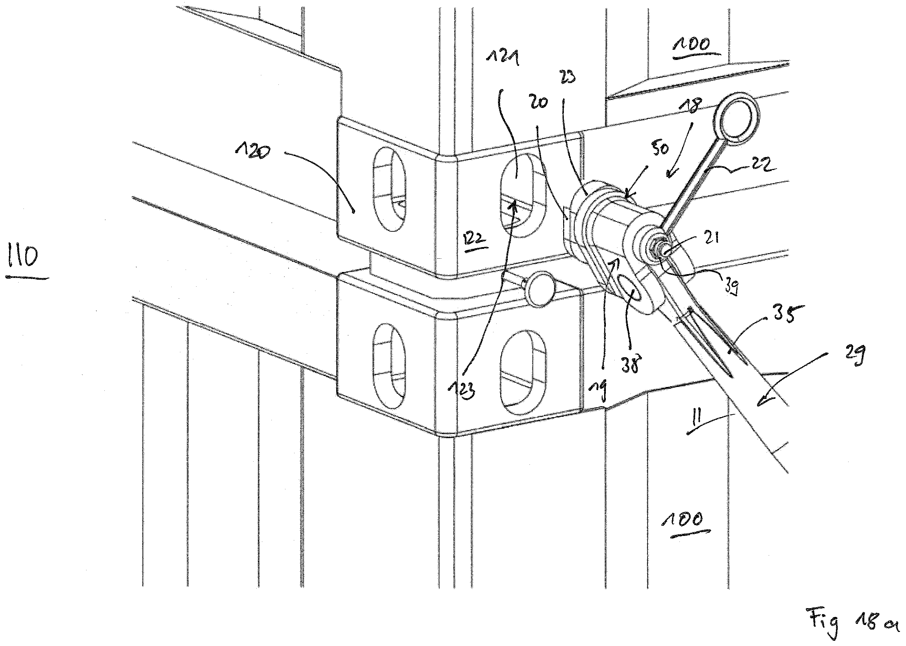

- Fig. 18a bis 18c: eine Darstellung des Verriegelungsschritts einer Laschstange gemäß Fig. 15a, 15b in einem Containereckbeschlag in Draufsicht,

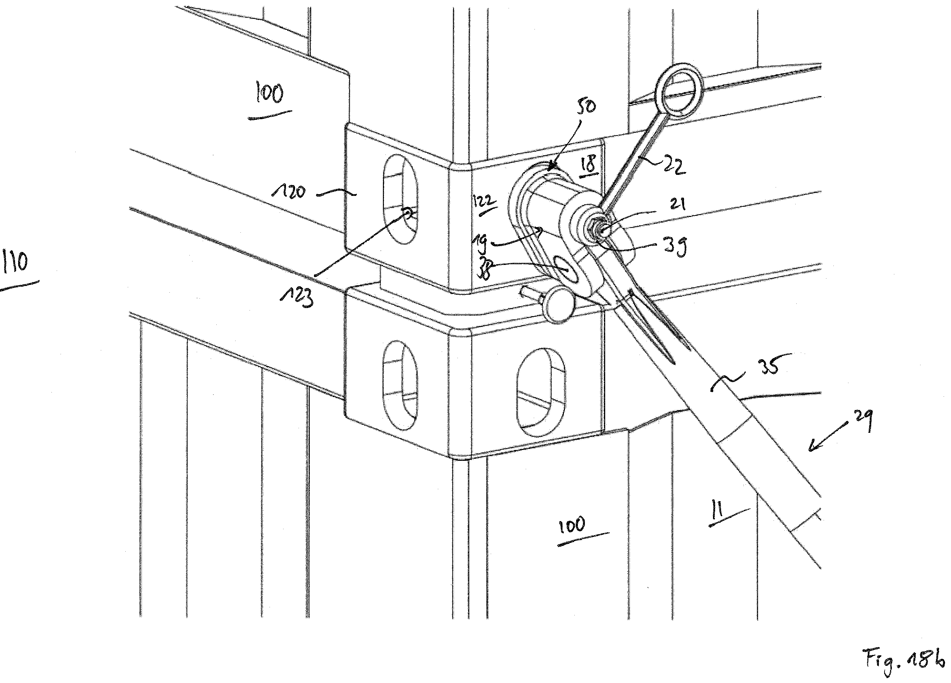

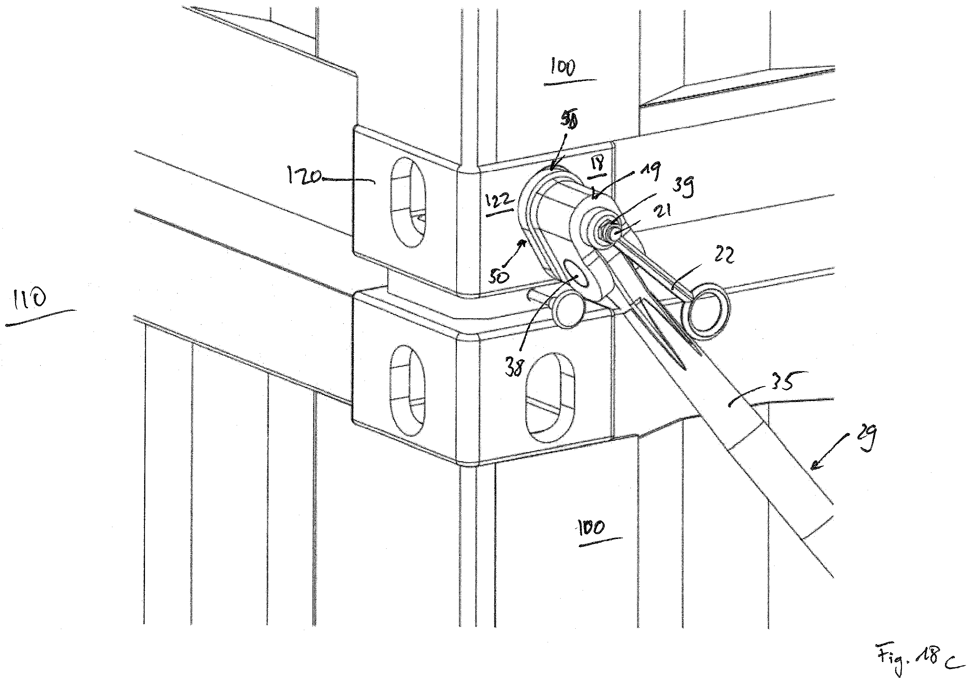

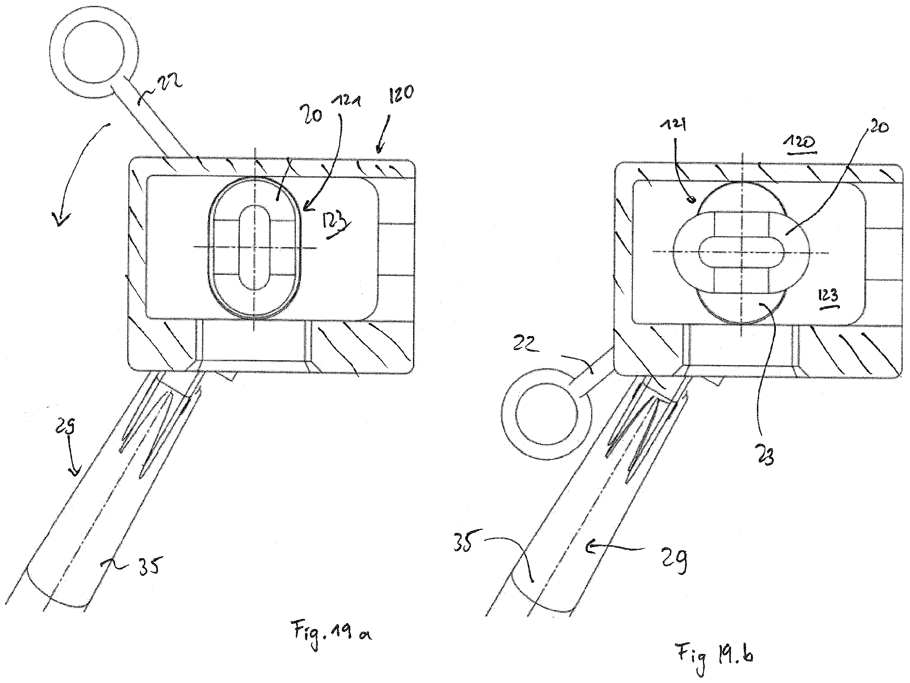

- Fig. 19a, 19b: eine Schnittansicht durch den Containereckbeschlag als Innenansicht zu Fig 18b, 18c,

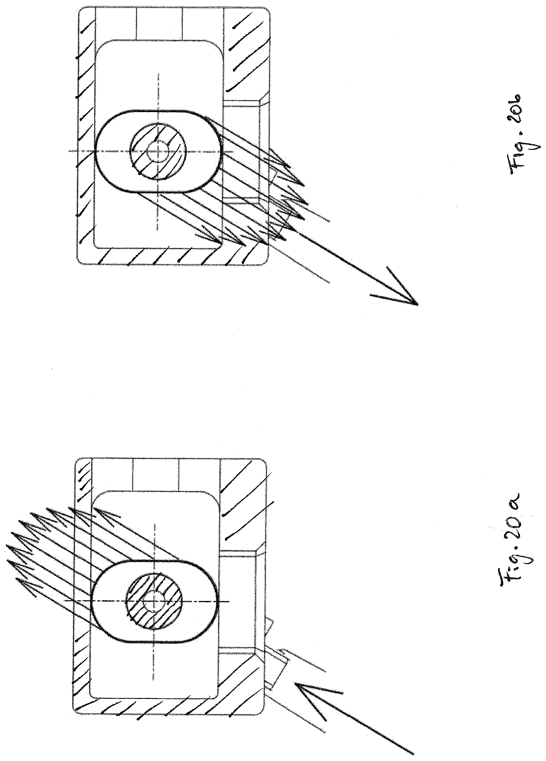

- Fig. 20a, 20b: eine alternative Schnittansicht analog Fig. 19b und Zug- und Druckbelastung,

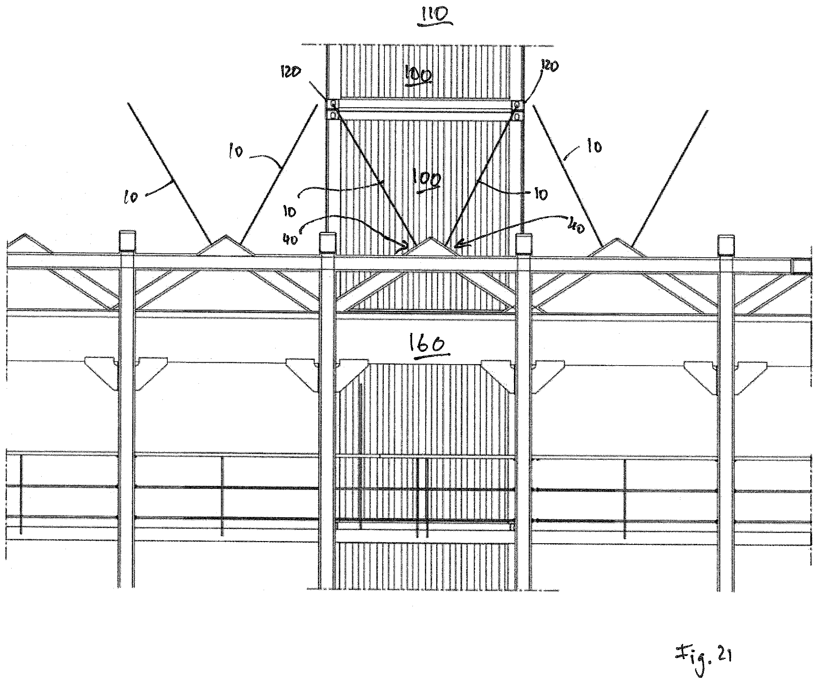

- Fig. 21: eine schematische Ansicht einer internen Laschung mit einem erfindungsgemäßen System,

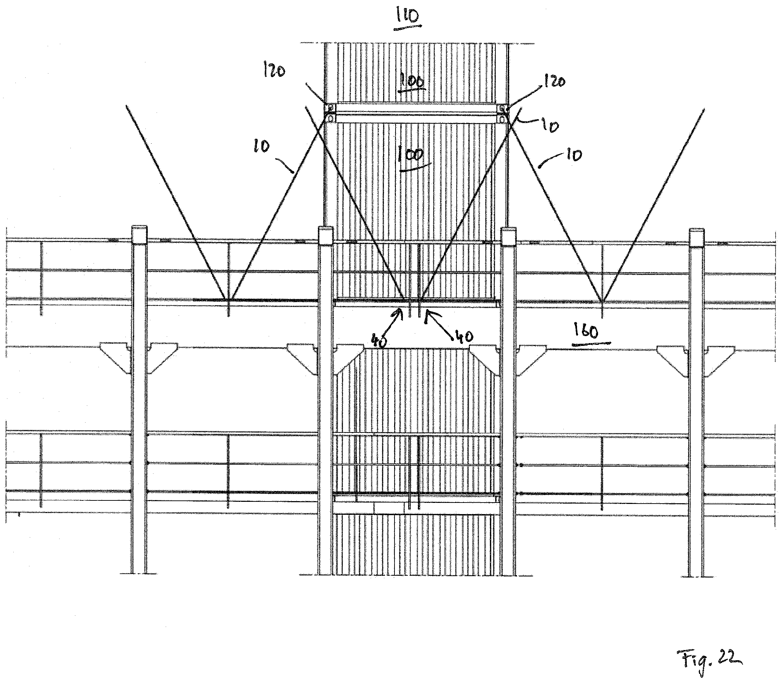

- Fig. 22: eine schematische Ansicht einer externen Laschung mit einem erfindungsgemäßen System,

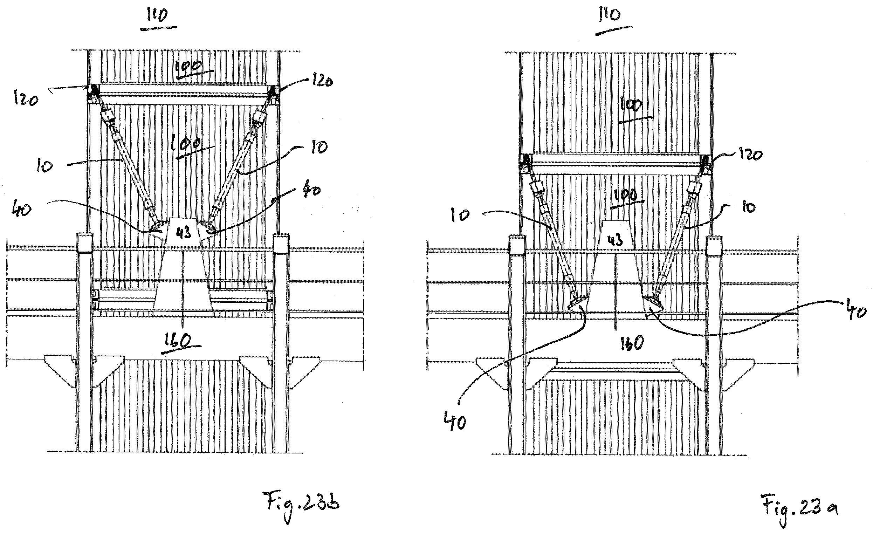

- Fig. 23a, 23b: eine räumliche Darstellung unterschiedlicher Anschlagspunkte in Verbindung mit einer Ausführung eines erfindungsgemäßen Systems,

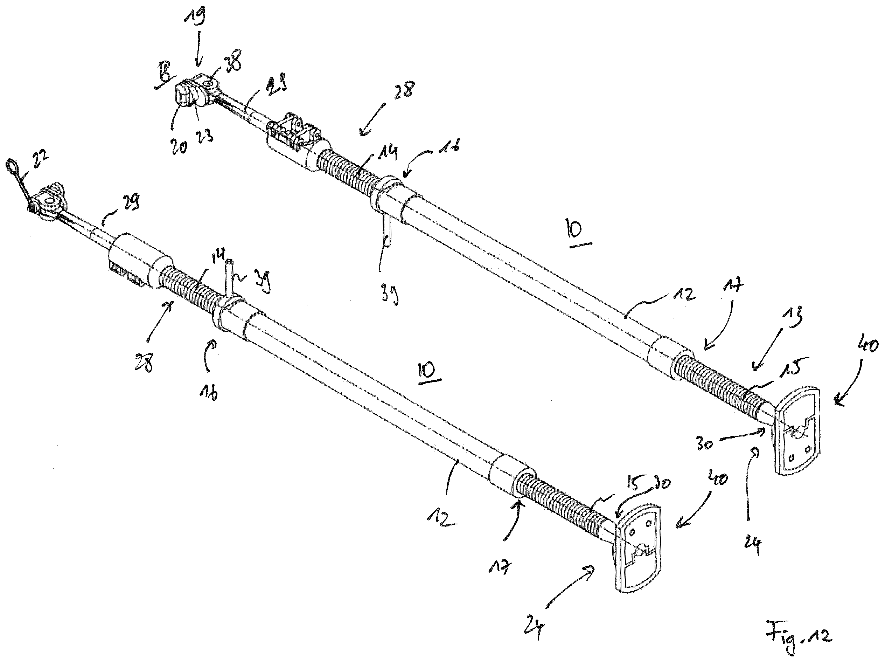

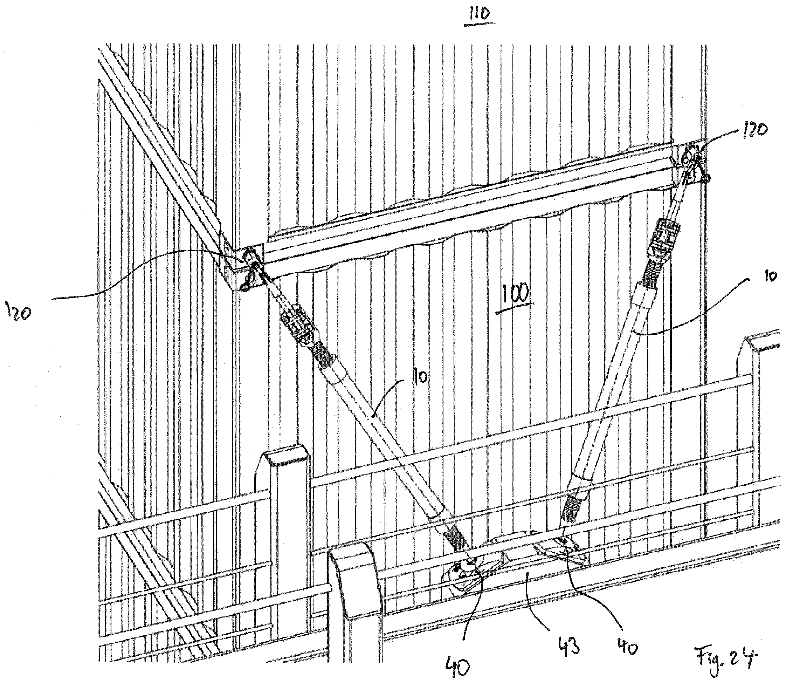

- Fig. 24: eine räumliche Darstellung einer Laschung eines Containers mit einem Laschmittels nach Fig. 12 gemäß einer Ausführungsform eines erfindungsgemäßen Laschsystems mit nach oben angeordneten Laschmitteln,

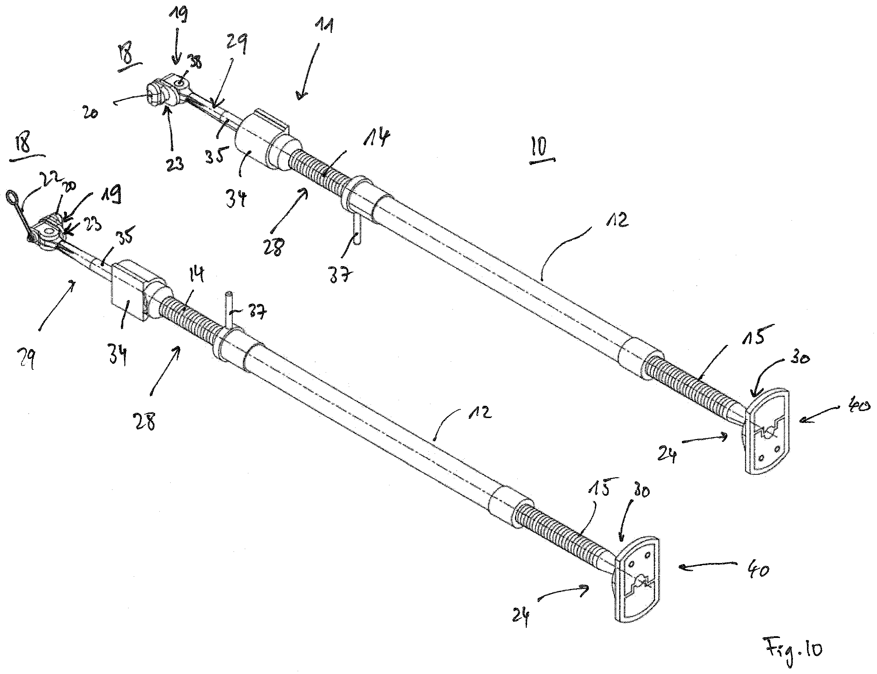

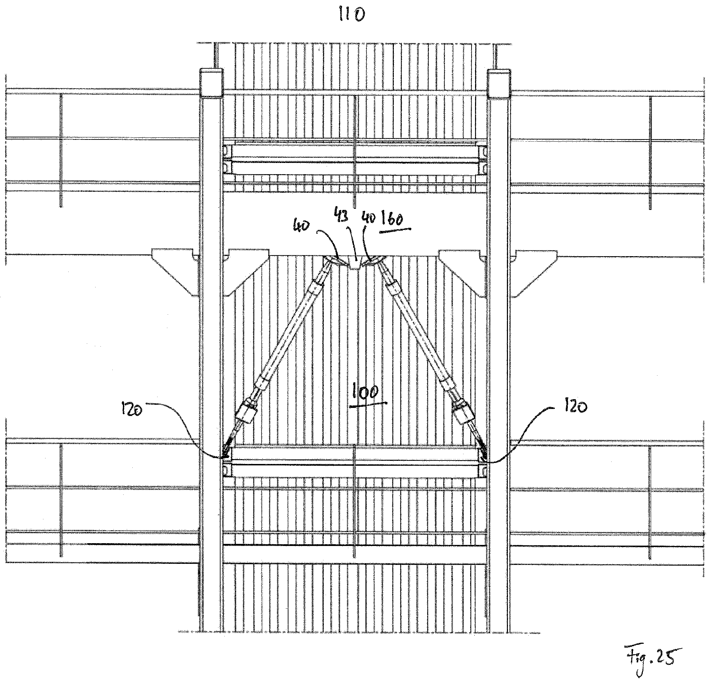

- Fig. 25: eine räumliche Darstellung einer Laschung eines Containers mit einem Laschmittels nach Fig. 10 gemäß einer alternativen Ausführungsform eines erfindungsgemäßen Laschsystems mit nach unten angeordneten Laschmitteln, und

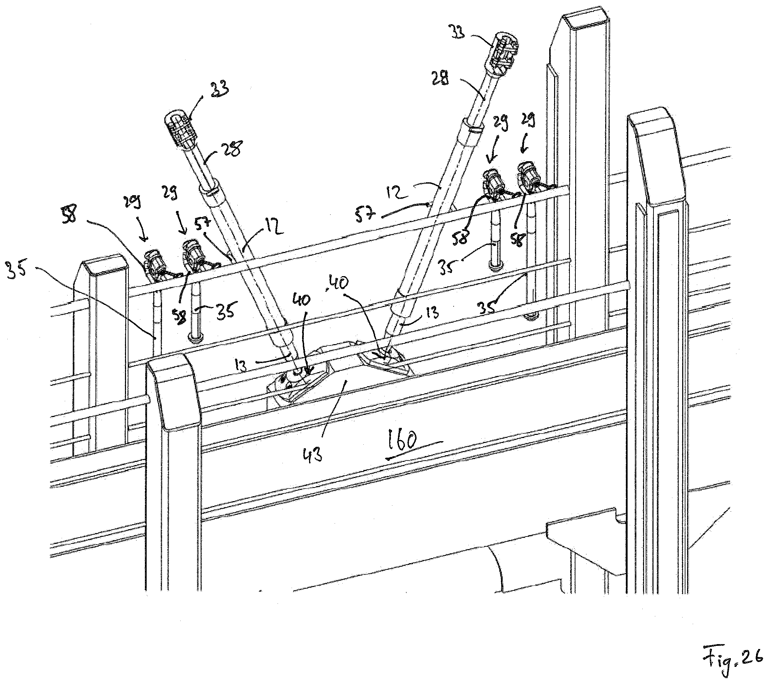

- Fig. 26: eine räumliche Darstellung der Komponenten der Laschmittel an einer Laschbrücke bei Nichtverwendung.

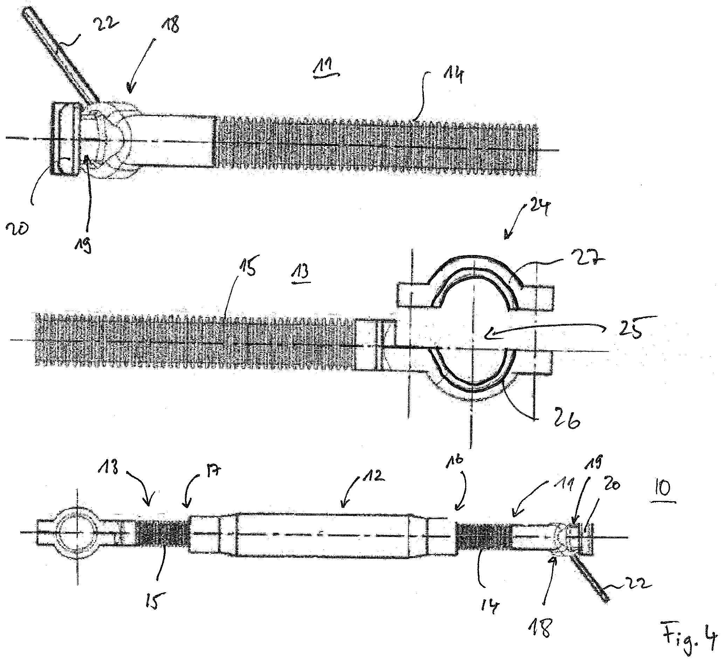

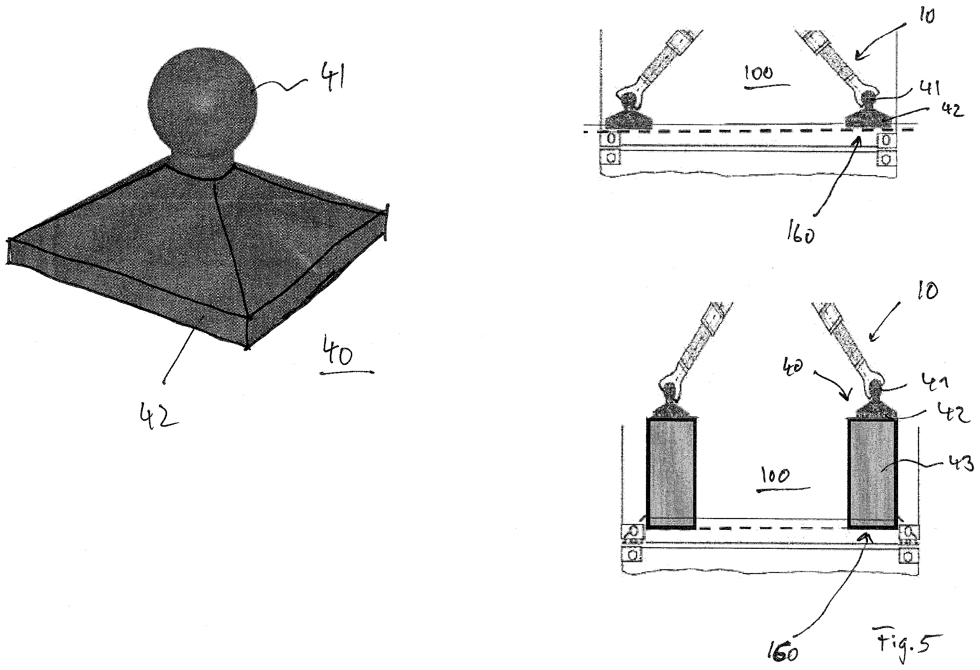

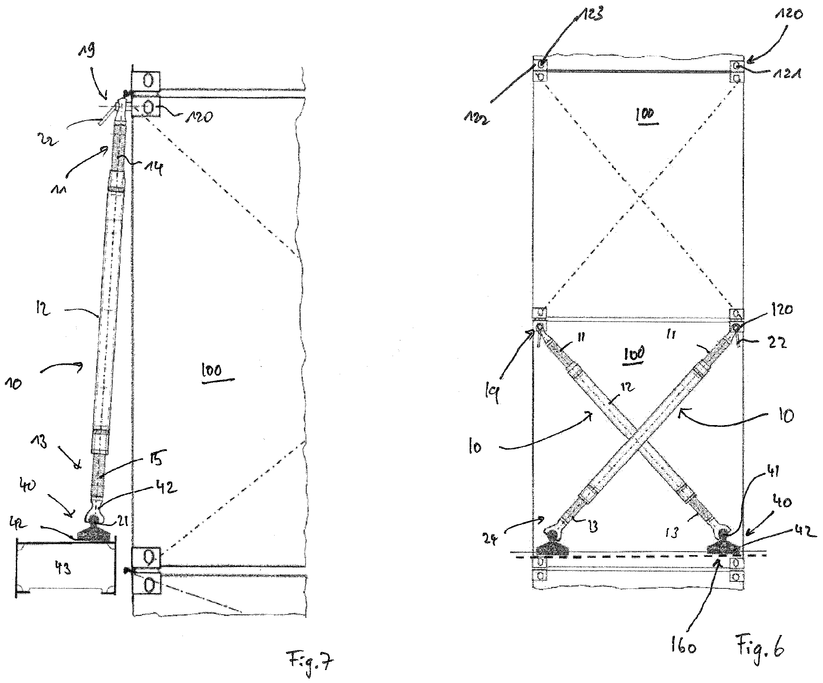

Fig. 6 bis 8 zeigen eine erste Ausführungsform eines erfindungsgemäßen Laschsystems. Dieses weist zwei sich kreuzende diagonal angeordnete Laschelemente 10 in einer ersten erfinderischen Ausführung in Verbindung mit Anschlägen 40 gemäß Fig. 4 und 5 auf.

Das Laschelement 10 weist eine Laschstange 11 ein Schraubelement 12, beispielsweise eine Spannschraube, und eine zweite Verbindungsstange 13 auf.

Die Laschstange 11 und die Verbindungsstange 13 weisen jeweils einen Gewindeabschnitt 14, 15 auf, die jeweils in eine Öffnung 16, 17 mit einem korrespondierenden Gewindeabschnitt (nicht dargestellt) dem Schraubelement 12/der Spannschraube einschraubbar sind.

Die Verbindungsstange 13 weist gegenüber dem Gewindeabschnitt 15 ein Verbindungsmittel 24 zum Verbinden mit einem Anschlag 40 auf, siehe Fig. 5. Der Anschlag 40 weist hier einen Kugelkopf 41 auf, der auf eine Platte 42 angeordnet ist, die auf Deck 150 oder an einer Laschbrücke 160 anordbar ist. Zwischen Deck 150 oder Laschbrücke 160 kann ein Podest 43 vorgesehen sein.

Das Verbindungsmittel 24 umfasst eine Öffnung 25, die mit dem Kugelkopf 41 des Anschlags 40 korrespondiert. Dabei ist am Verbindungsmittel ein erster Bügel 26 fest angeordnet, der einen ersten Teil der Öffnung 25 umfasst. An ihm lösbar befestigt ist ein zweiter lösbarer Bügel 27 zum Umfassen des Kugelkopfes 41. Die lösbare Verbindung ist beispielsweise eine Schraubverbindung.

Die Laschstange 11 weist einen Laschbeschlag 18 auf, der einen Drehkopf 19 mit einem Konuselement 20 aufweist. Das Konuselement ist gegenüber dem Drehkopf 19 drehbar gelagert und mit einer Achse 21 verbunden, die sich durch den Drehkopf 19 erstreckt. Auf der gegenüberliegenden Seite ist die Achse 21 mit einem Hebel 22 verbunden. Mit dem Hebel 22 kann der Konus 20 von einer entriegelten in eine verriegelte Stellung und zurückgedreht werden.

Der Konus 20 wir in entriegelter Stellung in eine seitliche Öffnung 121 auf der Stirnseite 122 eines Eckbeschlags 120 eines Containers 120 eingesetzt, so dass er sich im Innenraum 123. Anschließend wird der Hebel 22 gedreht, sodass sich die Drehbewegung über die Achse 21 auch den Konus 20 überträgt und dieser in eine verriegelte Stellung überführt wird.

Bevorzugt ist der Drehkopf 19 gegenüber einem Stangeabschnitt 35 der Laschstange 11 über eine Drehachse 38 drehbar gelagert.

Der Konus 20 ist dabei so vom Drehkopf beabstandet vorgesehen, dass er nach der Einführung in den Innenraum 123 gegenüber der Rückseite der Stirnseite 122 im Innenraum 123 drehbar ist, aber mit der Rückseite der der Stirnwand eine haltende Verbindung eingeht.

Bevorzugt ist zwischen Drehkopf 19 und Konuselement 19 ein Einsatzelement 23 vorgesehen, dessen Größe im Wesentlichen mit der Größe der Öffnung 121 übereinstimmt, so dass dieser in der Öffnung 121 eine formschlüssige Verbindung in der Ebene der Stirnwand 122 bereitstellt, so dass der Drehkopf 19 in der Öffnung 121 durch den Formschluss in der Ebene der Stirnwand 122 nicht beweglich ist.

An Deck 150 oder an einer Laschbrücke 160 sind beispielsweise auf Podesten 43 Anschläge 40 beispielsweise mit jeweils eine Kugelkopf 41. An diesem Kugelkopf 41 wird das Verbindungsmittel 24 eines Laschelements 10 angeordnet und durch Anbringen des Lösbaren Bügels 27 an festen Bügel 26 befestigt.

Das Schraubelement 12 wird gedreht, so dass die Gewindeabschnitte 14, 15 der Laschstange 11 und der Verbindungsstange 13 in die Öffnungen 16, 17 des Schraubelements 12 hineingedreht oder aus diesen herausgedreht wurde, bis die Länge des Laschelements 10 so ist, dass das Konuselement 20 in die Öffnung 121 des Eckbeschlags 120 einsetzbar ist.

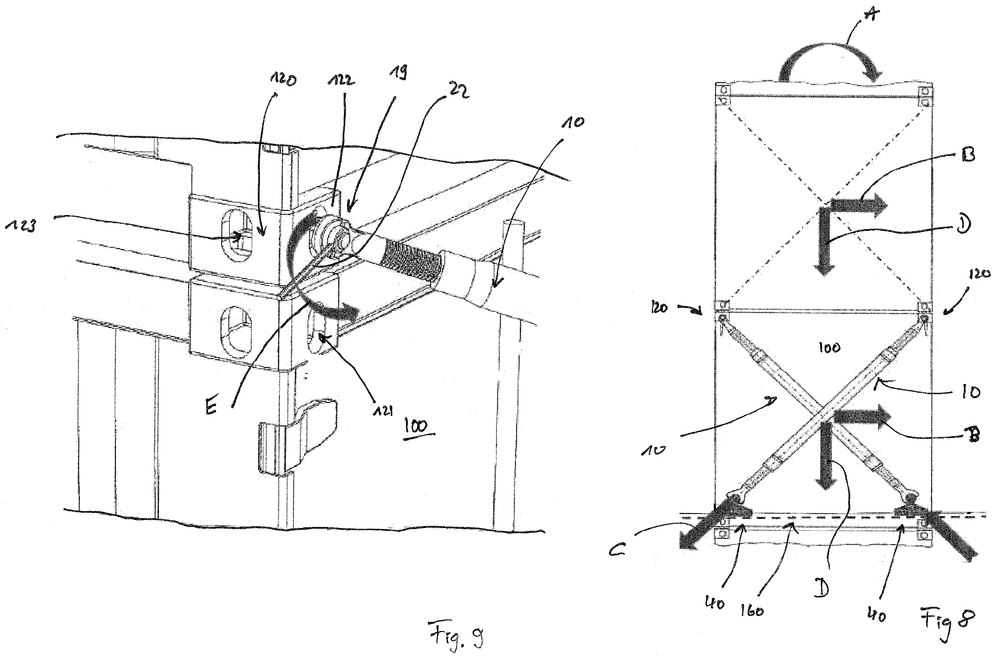

Anschließend wird das Konuselement 20 des Drehkopfes 19 in die Öffnung 121 des Eckbeschlags 120 eingeführt und durch Betätigen des Hebels 22 in Pfeilrichtung E verriegelt, siehe Fig. 9.

Dieses wird dann mit dem nächsten Laschelement 10 des zweiten Eckbeschlags 120 des Containers 100 wiederholt, so dass eine in Figur 6 dargestellte Kreuzlaschung besteht.

Rollt das Schiff z. B. zur Steuerbordseite in Pfeilrichtung A (nach rechts), wie in Fig. 8 dargestellt ist, so wird am Beispiel einer internen Laschung die Laschung 10, die in den rechten Containereckbeschlag 120 greift, auf Zug in Pfeilrichtung C beansprucht und die Laschung 10, die in einen linken Containereckbeschlag 120 greift, wird auf Druck in Pfeilrichtung F beansprucht, da sich der Container 100 auf Grund der Belastung nach rechts in Pfeilrichtung B bewegen will.

Das Parallelogramm des Containerrahmen wird damit stabilisiert, da hierdurch eine Lastverteilung im Containerrahmen/den Containereckbeschlägen stattfindet und dadurch der in Fig. 1 und 2 gezeigte einseitige Belastungsfall vermieden wird. Dadurch wird ein Versagen der untersten Containerecken bzw. ein Kollabieren der Containerseiten/pfosten vermieden bzw. die Wahrscheinlichkeit des Versagens deutlich reduziert.

Dadurch werden die bisher extrem hoch belasteten Container in den unteren Lagen eines mehrlagigen Stapels mit dem erfindungsgemäßen Laschsystem ganz wesentlich entlastet. Die sich bei einer Extrembelastung auftretenden Kräfte auf den Container werden je nach Winkel der Laschung nahezu halbiert. Die gleichen Kräfte, die bisher die Container mit dem alten System nur einseitig belastet haben, siehe Fig. 1, werden von beiden, diagonal angeordneten Laschelementen 10 aufgenommen, indem eine Seite wird auf Druck beansprucht und die andere Seite auf Zug beansprucht wird.

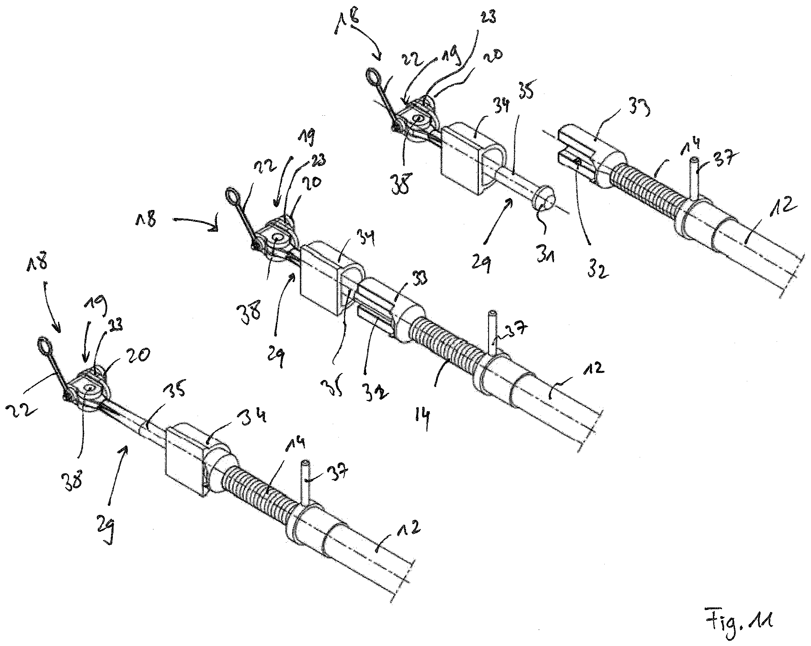

Fig. 10, 11 zeigen eine zweite Ausführungsform eines erfindungsgemäßen Laschelements 10.

Das Laschelement 10 weist eine Laschstange 11, ein Schraubelement 12, beispielsweise eine Spannschraube, und eine zweite Verbindungsstange 13 auf.

Die Laschstange 11 ist hier zweigeteilt mit einem Gewindeabschnittelement 28 mit einem Gewindeabschnitt 14 und einem Laschstangenabschnitt 29 (siehe auch Fig. 15 a bis 17b). Die Verbindungsstange 13 weist wiederum einen Gewindeabschnitt 15 auf. Die Gewindeabschnitte 14, 15 sind jeweils in eine Öffnung 16, 17 mit einem korrespondierenden Gewindeabschnitt (nicht dargestellt) dem Schraubelement 12/der Spannschraube einschraubbar. Das Ein- oder Ausschrauben der Spannschraube 12 in Bezug auf die Gewindeabschnitte 14, 15 erfolgt bevorzugt durch Rotation des Schraubelements 12. Weiterhin kann bevorzugt eine Sicherungsarretierung 37 vorgesehen sein.

Der Laschstangenabschnitt 29 weist einen Stangenabschnitt 35 mit einem Vorsprung 31 auf, der in eine am äußeren Ende des Gewindestangenabschnitts 28 angeordnete Aufnahme 33 mit einer zum Vorsprung 31 korrespondierenden Öffnung 32 einsetzbar ist.

Über dem Stangenabschnitt 35 des Laschstangenabschnitts 29 ist bevorzugt eine Sicherungskappe 34 beweglich angeordnet. Diese weist am oberen Ende eine Öffnung 36 auf, die kleiner als der Vorsprung 31 ist, so dass die Sicherungskappe 34 nicht vom Stangenabschnitt 35 abziehbar ist.

Zum Laschen des Containers 100 mit dem erfindungsgemäßen Laschelement 10 wird der Laschstangenabschnitt 29 mit dem Vorsprung 31 in die Öffnung 32 eingesetzt. Nach dem Einsetzen wird eine Sicherungskappe 34 über die Aufnahme geklemmt, so dass der Vorsprung 31 nicht mehr aus der Öffnung 32 bewegt werden kann. Bevorzugt ist eine Arretierung (nicht dargestellt) vorgesehen, mit der die Sicherungskappe 34 gegen ein Lösen der Klemmung gesichert ist.

Die Aufnahme 33 und der Vorsprung 31 sind dabei so vorgesehen, dass über die Verbindung der beiden Elemente 33, 31 eine Druckkraft übertragbar ist.

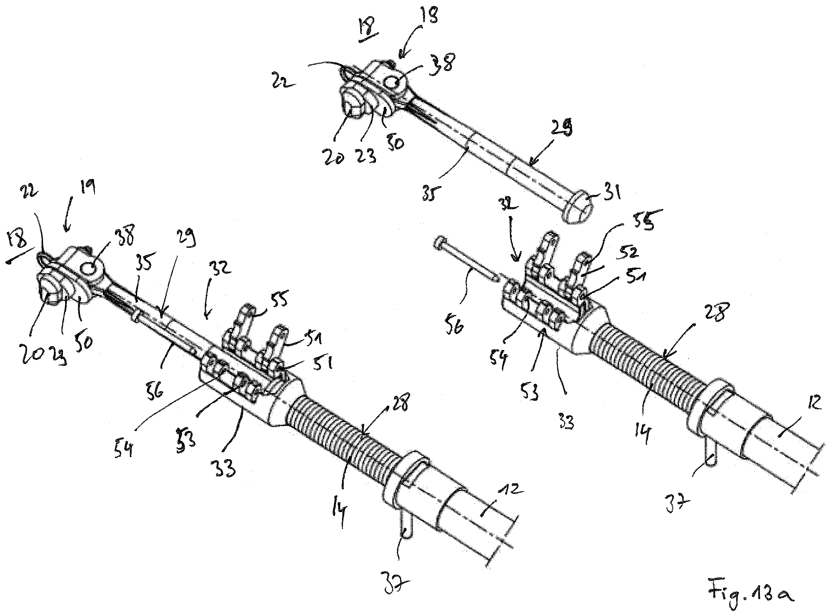

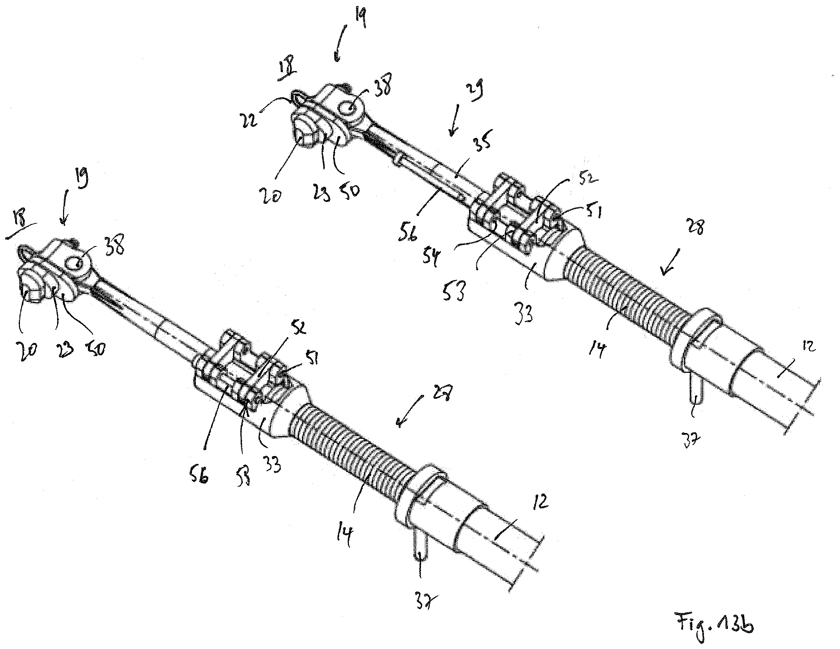

Fig. 12, 13a, 13b zeigt eine dritte Ausführungsform eines erfindungsgemäßen Laschelements 10.

Das Laschelement 10 weist eine Laschstange 11, ein Schraubelement 12, beispielsweise eine Spannschraube, und eine zweite Verbindungsstange 13 auf.

Die Laschstange 11 ist hier zweigeteilt mit einem Gewindeabschnittelement 28 mit einem Gewindeabschnitt 14 und einem Laschstangenabschnitt 29 (siehe auch Fig. 15 a bis 17b). Die Verbindungsstange 13 weist wiederum einen Gewindeabschnitt 15 auf. Die Gewindeabschnitte 14, 15 sind jeweils in eine Öffnung 16, 17 mit einem korrespondierenden Gewindeabschnitt (nicht dargestellt) dem Schraubelement 12/der Spannschraube einschraubbar. Das Ein- oder Ausschrauben der Spannschraube 12 in Bezug auf die Gewindeabschnitte 14, 15 erfolgt bevorzugt durch Rotation des Schraubelements 12. Weiterhin kann bevorzugt eine Sicherungsarretierung 37 auf.

Der Laschstangenabschnitt 29 weist einen Stangenabschnitt 35 mit einem Vorsprung 31 auf, der in eine am äußeren Ende des Gewindestangenabschnitts 28 angeordnete Aufnahme 33 mit einer zum Vorsprung 31 korrespondierenden Öffnung 32 einsetzbar ist.

Um den Laschstangenabschnitt 29 mit dem Gewindestangeabschnitt 28 haltend sicher zu verbinden, ist an der Aufnahme 33 zum Verschließen der Öffnung 31 ist wenigstens eine an einem Scharnier 51 beweglich angeordnetes Klemmelement 52 vorgesehen. In dem in den Fig. 12, 13a, 13b dargestellten Ausführungsform sind bevorzugt zwei Klemmelemente 52 vorgesehen.

Gegenüberliegend auf der anderen Seite der Öffnung ist eine sperrende Aufnahme 53 vorgesehen. Diese weist eine Öffnung 54 auf. Das Klemmelement 53 weist eine Öffnung 55 auf, die mit der Öffnung 54 fluchtet, wenn das Klemmelement 52 in die sperrende Aufnahme 53 eingesetzt ist. Durch die Öffnungen 54, 55 wird zur Arretierung ein Sperrelement 56, hier bevorzugt ein Stift eingesetzt.

Fig. 13a und Fig. 13b zeigen das Einsetzen des Laschstangenabschnitt 29 in die Aufnahme 33, das Verriegeln mit den Klemmelementen 52 und das Sperren der Verriegelung mit dem Sperrelement 56.

Sind die Klemmelemente 53 geschlossen und mit dem Stift 56 verriegelt, ist Der Laschstangenabschnitt 29 fest mit dem Gewindestangeabschnitt 28 fest kraftschlüssig und/oder formschlüssig verbunden.

Zum Laschen des Containers 100 mit dem erfindungsgemäßen Laschelement 10 wird der Laschstangenabschnitt 29 mit dem Vorsprung 31 in die Öffnung 32 eingesetzt. Nach dem Einsetzen wird das wenigstens eine Klemmelement 52 in die korrespondierende sperrende Aufnahme 53 eingelegt und durch Einführen des Sperrelements 56 in die Öffnungen 54, 55 verriegelt, so dass der Vorsprung 31 nicht mehr aus der Öffnung 32 bewegt werden kann.

Die Aufnahme 33 und der Vorsprung 31 sind dabei so vorgesehen, dass über die Verbindung der beiden Elemente 33, 31 eine Druckkraft übertragbar ist.

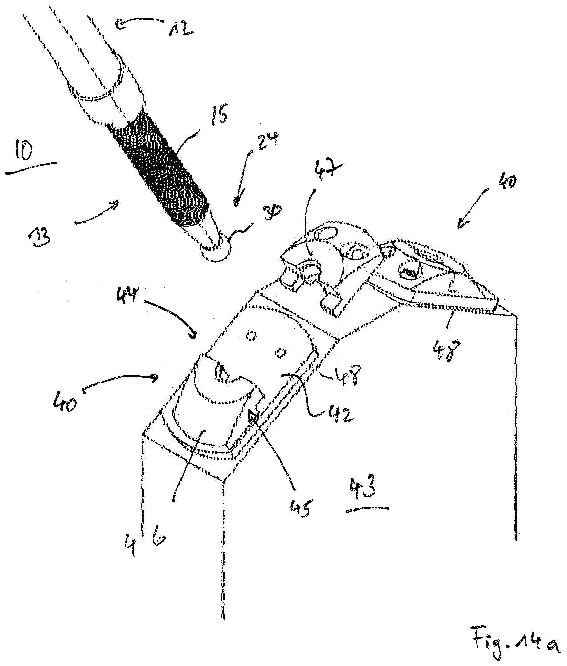

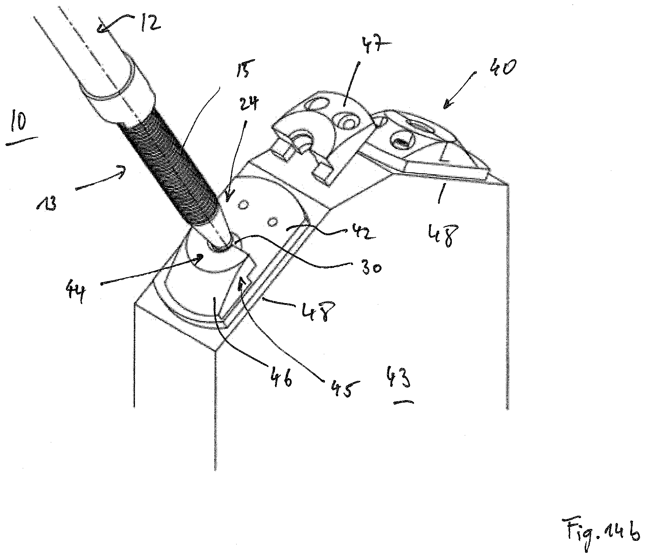

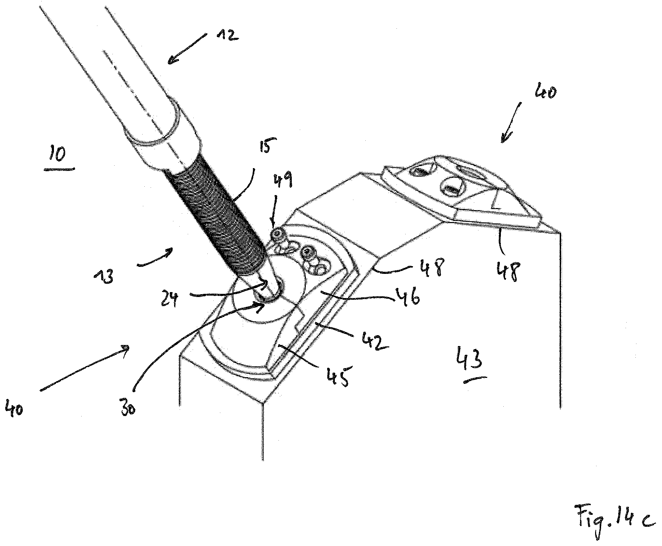

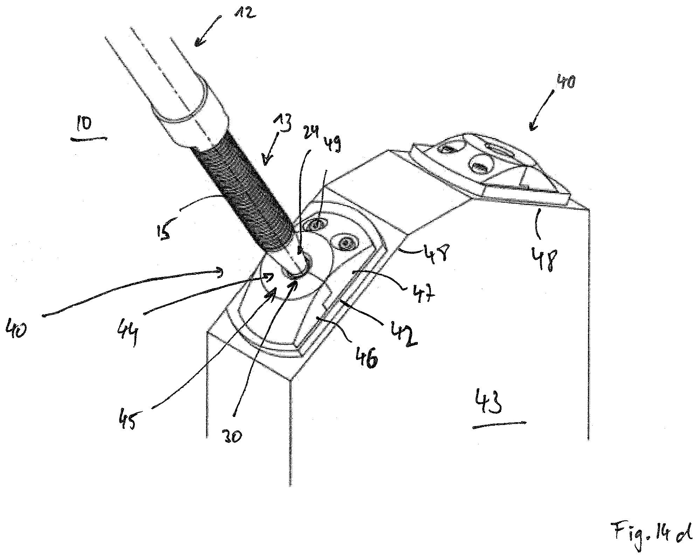

Bevorzugt werden die beiden Laschelementausführungen mit einem Anschlagsystem gemäß den Fig. 14a-14d zur Laschung verwendet.

Die Verbindungsstange 13 für die zweite und dritte Ausführungsform des Laschelements 10 weist gegenüber dem Gewindeabschnitt 15 ein Verbindungsmittel 24 zum Verbinden mit einem Anschlag 40 auf. Bevorzugt handelt es sich hier beidem Verbindungsmittel 24 um eine Kugelelement 30. Der Anschlag 40 weist hier eine Aufnahme 44 auf, die eine Platte 42 mit einem zweigeteilten Halteelement 45 aufweist, mit einem festen Halteabschnitt 46 und einem lösbaren Halteabschnitt 47 angeordnet ist, die auf Deck 150 oder an einer Laschbrücke 160 anordbar ist.

Zwischen Deck 150 oder Laschbrücke 160 kann ein Podest 43 vorgesehen sein, das hier bevorzugt schräge Aufnahmeflächen für das Halteelement 45 aufweist, auf denen die Halteelemente 45 befestigt sind.

Das Kugelelement 30 wird in die Aufnahme 44 eingesetzt, indem das Kugelelement 30 in den festen Halteabschnitt 46 des Halteelement 45 eingesetzt wird. Anschließend wird der lösbare Haltabschnitt 47 aufgesetzt und befestigt, bevorzugt mit Schrauben 49 festgeschraubt., so dass das Kugelelement 30 im Halteelement 44 arretiert ist, aber weiterhin rotationsbeweglich ist. Dieses ist in den Fig. 14a bis 14d dargestellt.

Weiterhin bevorzugt werden die beiden Ausführungsformen der Laschelemente 10 mit Laschstangenabschnitten 29 der Laschstangen 11 gemäß den Figuren 15a bis 17b verwendet.

Der Laschstangenabschnitt 29 der Laschstange 11 weist einen Laschbeschlag 18 auf, der einen Drehkopf 19 mit einem Konuselement 20 aufweist. Das Konuselement 20 ist gegenüber dem Drehkopf 19 drehbar gelagert und mit einer Achse 21 verbunden, die sich durch den Drehkopf 19 erstreckt. Auf der gegenüberliegenden Seite ist die Achse 21 mit einem Hebel 22 verbunden. Diese kann mit einem Arretierelement 39, wie eine Mutter, gesichert sein. Mit dem Hebel 22 kann der Konus 20 von einer entriegelten (Fig. 15b, 16b) in eine verriegelnde Stellung (Fig. 15a, 16a) und zurückgedreht werden.

Das Einsetzen und Verriegeln der Laschstangen 11 mit ihren Drehköpfen mit Konuselement 20 und Einsetzelement 23 ist in den Fig. 18a bis 20b gezeigt.

Der Konus 20 wird wie in Fig. 18a, 18b, 19a in entriegelter Stellung in eine Öffnung 121 auf der Stirnseite 122 eines Eckbeschlags 120 eines Containers 100 eingesetzt, so dass er sich im Innenraum 123 befindet und das Einsatzelement 23 in der Öffnung 121. Anschließend wird der Hebel 22 gedreht, sodass sich die Drehbewegung über die Achse 21 auch den Konus 20 überträgt und dieser in eine verriegelte Stellung überführt wird. (Fig. 18c, 19b)

Bevorzugt wird der Drehkopf 19 über die Drehachse 38 gegenüber dem Stangenabschnitt so in einen notwendigen Winkel eingestellt, dass ein Anschlag 50 gerade an der Stirnseite 122 anliegt.

Bevorzugt ist der Drehkopf 19 gegenüber einem Stangeabschnitt 35 der Laschstange 11 über eine Drehachse 38 drehbar gelagert.

Der Konus 20 ist so vom Drehkopf beabstandet vorgesehen, dass er nach der Einführung in den Innenraum 123 gegenüber der Rückseite der Stirnseite 122 im Innenraum 123 drehbar ist, aber mit der Rückseite der der Stirnwand eine haltende Verbindung eingeht.

Bevorzugt ist zwischen Drehkopf 19 und Konuselement 19 Einsatzelement 23 vorgesehen, dessen Größe im Wesentlichen mit der Größe der Öffnung 121 übereinstimmt, so dass dieser in der Öffnung 121 eine formschlüssige Verbindung in der Ebene der Stirnwand 122 bereitstellt, so dass der Drehkopf 19 in der Öffnung 121 durch den Formschluss in der Ebene der Stirnwand 122 nicht beweglich ist. Hierdurch lassen sich auf einfache Weise sicher sowohl Druck wie auch Zugkräfte vom Eckbeschlag 120 in das Laschelement 10 und umgekehrt übertragen, wie diese in Fig. 20a, 20b gezeigt ist.

Fig. 26 zeigt eine Möglichkeit, die erfindungsgemäßen Laschelemente 10 an eine Laschbrücke 160 anzuordnen, wenn diese nicht in Benutzung sind. Dafür bleibt das Laschelement 10 am Anschlag 40 montiert und wird in einem Haken 57 arretiert. Es sind zwei Laschstangenelemente 11 bzw. Laschstangenabschnitte 29 mit unterschiedlich langen Stangenabschnitten 29 vorgesehen, die separate in Aufnahmen 58 vorgesehen sind.

Um die Laschelemente 10 zu verwenden, werden dies aus den Harken 57 entnommen und durch Drehen des Schraubelements ggf. auf die gewünschte Länge gebracht. Dann wird das zweite Laschstangenelement 11 bzw. der Laschstangenabschnitt 29 mit der gewünschten Länge aus der jeweiligen Aufnahme 58 entnommen und mit dem Vorsprung 31 in die Aufnahme 33 eingesetzt und arretiert wie zuvor beschrieben.

Anschließend wird das Konuselement 20 durch die Öffnung 121 geschoben und das Einsatzelement 23 in die Öffnung 121 eingesetzt. Dann wird der Hebel 22 betätigt und das Konuselement 20 zum Arretieren des Laschelements im Eckbeschlag 120 des Containers 100 gedreht, so dass eine formschlüssige und kraftschlüssige Verbindung entsteht. Am Zielort wird zum Entladen des Containers 100 das Laschelement entsprechend umgekehrt entfernt.

Fig. 21 zeigt schematisch eine interne Laschung mit erfindungsgemäßen Laschelementen 10 an einer Laschbrücke 160 zwischen einem an der Laschbrücke 160 angeordneten Anschlag 40 und einem Eckbeschlag 120 eines direkt im Laschbereich befindlichen Containers 100.

Fig. 22 zeigt schematisch eine externe Laschung mit erfindungsgemäßen Laschelementen 10 an einer Laschbrücke 160 zwischen einem an der Laschbrücke 160 angeordneten Anschlag 40 und einem Eckbeschlag 120 eines benachbart zum direkten Laschbereich befindlichen Containers 100.

Fig. 23a und 23b zeigen eine interne Laschung mit erfindungsgemäßen Laschelementen 10. Dabei ist mittig im Laschbereich ein Podest 43 an der Laschbrücke 160 angeordnet. Je nach Höhe der Container 100 im Containerstapel 110 können die Eckbeschläge 120 unterschiedlich hoch sein. Bevorzugt ist, um diese Höhenunterschiede auszugleichen, dafür der Anschlag 40 am Podest 43 in unterschiedlichen Höhen anordbar.

Es hat sich als vorteilhaft erwiesen, Die Anschläge 40 mittig zum Container 100 vorzusehen und die Laschelemente 10 von der Mitte heraus, ohne dass diese sich kreuzen, anzuordnen. Dabei können die Laschelemente wie in den Fig. 23a, 23b, 24 gezeigt nach oben angeordnet sein oder wie in Fig. 25 gezeigt nach unten angeordnet sein. Bei beiden Anordnungen ist die Funktion der Aufnahme von Druck- und Zugkräften gewährleistet.

Bei einer Anordnung der erfindungsgemäßen Laschelementen 10 nach unten wie in Fig. 25 gezeigt, ist es vorteilhaft, dass jeweils die Druckseite entlastet wird und ebenso die Zugseite. Das gilt für die Rollbewegungen des Schiffes nach Backbord und nach Steuerbord.

## Patentansprüche

1. Laschelement (10) zum vertikalen Verbinden eines Containers (100) oder eines Stapels (110) von wenigstens zwei übereinander angeordneten Containern (100) mit einem Anschlag (40) auf einer Oberfläche, insbesondere an Bord eines Schiffes, mit wenigstens einem Element (24) zum Herstellen einer lösbaren beweglichen Verbindung mit dem Anschlag (40), mit wenigstens einem Element (18) zum Herstellen einer lösbaren Verbindung mit einem Eckbeschlag (120) des Containers (100), mit wenigstens einem Element (12) zum Ändern einer Länge des Laschelements (10) zum Anpassen der Länge des Laschelements (10) und zum Spannen des Laschelements zwischen der Containerecke (120) und dem Anschlag (40), **dadurch gekennzeichnet, dass** zwischen dem wenigstens einen Element (24) zum Herstellen einer lösbaren beweglichen Verbindung mit dem Anschlag (40) und dem wenigstens einen Element (18) zum Herstellen einer lösbaren Verbindung mit einem Eckbeschlag (120) des Containers (100) eine druck- und zugfeste Verbindung besteht, dass es sich bei dem wenigstens einen Element (18) zum Herstellen einer lösbaren Verbindung mit einem Eckbeschlag (120) des Containers (100) um einen Laschbeschlag (18) handelt, dass der Laschbeschlag (18) einen Drehkopf (19) aufweist, der beweglich, um eine Drehachse (38) verschwenkbar, gegenüber einem Stangenabschnitt (35) der Laschstange (11) angeordnet ist, dass der Laschbeschlag (18) ein drehbares Konuselement (20) zum Eingreifen in eine Öffnung (121) des Eckbeschlags (120) des Containers (100) zum Herstellen einer formschlüssigen Verbindung aufweist, wobei das Konuselement (20) drehbar am Drehkopf (19) angeordnet ist, dass der Laschbeschlag (18) ein Einsatzelement (23) aufweist, das in die Öffnung (121) des Eckbeschlags (120) des Containers (100) einsetzbar ist, dass das Einsatzelement (23) die Dimension der Öffnung (121) des Eckbeschlags (120) des Containers (100) aufweist, so dass nach dem Einsetzen des Einsatzelements (23) in die Öffnung eine formschlüssige Verbindung in der Ebene der Öffnung (121) vorliegt, und dass das Einsatzelement (23) zwischen dem Konuselement (20) und dem Drehkopf (19) angeordnet ist.

2. Laschelement nach Anspruch 1, **dadurch gekennzeichnet, dass** es sich bei wenigstens einem Element (12) zum Ändern einer Länge des Laschelements (10) um ein Schraubelement (12), bevorzugt um eine Spannschraube handelt.

3. Laschelement nach Anspruch 1 oder 2, **dadurch gekennzeichnet, dass** das Schraubelement (12) wenigstens eine Öffnung (16, 17), bevorzugt zwei Öffnungen, aufweist, die mit einem Gewinde versehen ist, in das ein Gewindeabschnitt (14, 15) einer Laschstange (11) oder einer Verbindungsstange (13) ein- und ausschraubbar ist.

4. Laschelement nach einem der Ansprüche 1 bis 3, **dadurch gekennzeichnet, dass** es sich bei dem wenigstens einen Element (24) zum Herstellen einer lösbaren beweglichen Verbindung mit dem Anschlag (40) um ein Kugelelement (30) oder eine Aufnahme für ein Kugelelement handelt.

5. Laschelement nach einem der Ansprüche 1 bis 4, **dadurch gekennzeichnet, dass** das Laschelement (11) einen Gewindestangenabschnitt (28) und eine Laschstangenabschnitt (29) aufweist, die lösbar miteinander verbunden sind.

6. Laschelement nach Anspruch 5, **dadurch gekennzeichnet, dass** die Verbindung zwischen Gewindestangenabschnitt (28) und eine Laschstangenabschnitt (29) so ausgeführt ist, dass über die Verbindung Druck- und Zugkräfte übertragbar sind.

7. Laschelement nach Anspruch 5 oder 6, **dadurch gekennzeichnet, dass** das Gewindestangenabschnitt (28) eine Aufnahme (33) für ein Verbindungselement (31) des Laschstangenabschnitts (29), bevorzugt ein Vorsprung (31) am hinteren Ende des Laschstangenabschnitts (29), aufweist.

8. Laschelement nach Anspruch 7, **dadurch gekennzeichnet, dass** die Aufnahme (33) gegenüber dem Verbindungselement (31) mit einem Verriegelungselement (34, 52) verriegelbar ist.

9. Laschsystem zum vertikalen Sichern eines Containers (100) oder eines Stapels (110) von wenigstens zwei übereinander angeordneten Containern (100) mit einem Anschlag (40), insbesondere an Bord eines Schiffes, mit wenigstens zwei Laschelementen (10) nach einem der Ansprüche 1 bis 8 und wenigstens zwei Anschlägen (40) auf wenigstens einer Oberfläche wie beispielsweise einem Deck, einem Lukendeckel oder einer Laschbrücke.

10. Laschsystem nach Anspruch 9, **dadurch gekennzeichnet, dass** wenigstens einer der zwei Anschläge (40) auf wenigstens einem Podest (43) auf der wenigstens einen Oberfläche vorgesehen ist.

11. Laschsystem nach Anspruch 9 oder 10, **dadurch gekennzeichnet, dass** der wenigstens eine Anschlag (40) auf dem Podest (43) verschiebbar angeordnet ist.

12. Laschsystem nach einem der Ansprüche 9 bis 11, **dadurch gekennzeichnet, dass** die Laschelemente (10) ausgehend von den Anschlägen nach oben oder nach unten angeordnet sind.

13. Laschsystem nach einem der Ansprüche 9 bis 11, **dadurch gekennzeichnet, dass** die Anschläge mittig in Bezug auf den zu sichernden Container (100) angeordnet sind, so dass bevorzugt die Laschelemente (10) sich nicht kreuzend zwischen den Anschlägen (40) und den Eckbeschlägen (120) des Containers (100) angeordnet sind.

14. Laschsystem nach einem der Ansprüche 9 bis 11, **dadurch gekennzeichnet, dass** die Anschläge außen in Bezug auf den zu sichernden Container (100) angeordnet sind, so dass bevorzugt die Laschelemente (10) sich kreuzend zwischen den Anschlägen (40) und den Eckbeschlägen (120) des Containers (100) angeordnet sind.

## Claims

1. Lashing element (10) for vertically connecting a container (100) or a stack (110) of at least two containers (100) arranged one above the other to an anchor point (40) on a surface, in particular on board a ship, having at least one element (24) for establishing a releasable movable connection to the anchor point (40), having at least one element (18) for establishing a releasable connection to a corner fitting (120) of the container (100), having at least one element (12) for changing a length of the lashing element (10) for adaptation of the length of the lashing element (10) and for tensioning of the lashing element between the container corner (120) and the anchor point (40), **characterized in that** there is a compression- and tension-resistant connection between the at least one element (24) for establishing a releasable movable connection to the anchor point (40) and the at least one element (18) for establishing a releasable connection to a corner fitting (120) of the container (100), **in that** the at least one element (18) for establishing a releasable connection to a corner fitting (120) of the container (100) is a lashing fitting (18), **in that** the lashing fitting (18) has a rotary head (19) which is arranged movably, so as to be pivotable around a rotation pin (38), in relation to a rod portion (35) of the lashing rod (11), **in that** the lashing fitting (18) has a rotatable cone element (20) for engagement into an opening (121) of the corner fitting (120) of the container (100) for establishing a form-fitting connection, wherein the cone element (20) is arranged rotatably on the rotary head (19), **in that** the lashing fitting (18) has an insert element (23) which is insertable into the opening (121) of the corner fitting (120) of the container (100), **in that** the insert element (23) has the dimensions of the opening (121) of the corner fitting (120) of the container (100), so that, after insertion of the insert element (23) into the opening, there is a form-fitting connection in the plane of the opening (121), and **in that** the insert element (23) is arranged between the cone element (20) and the rotary head (19).

2. Lashing element according to Claim 1, **characterized in that** the at least one element (12) for changing a length of the lashing element (10) is a screw element (12), preferably a tensioning screw.

3. Lashing element according to Claim 1 or 2, **characterized in that** the screw element (12) has at least one opening (16, 17), preferably two openings, provided with a thread, a threaded portion (14, 15) of a lashing rod (11) or of a connecting rod (13) being able to be screwed into and out of said thread.

4. Lashing element according to one of Claims 1 to 3, **characterized in that** the at least one element (24) for establishing a releasable movable connection to the anchor point (40) is a ball element (30) or a receptacle for a ball element.

5. Lashing element according to one of Claims 1 to 4, **characterized in that** the lashing element (11) has a threaded-rod portion (28) and a lashing-rod portion (29) which are connected releasably to each other.

6. Lashing element according to Claim 5, **characterized in that** the connection between the threaded-rod portion (28) and a lashing-rod portion (29) is configured in such a way that compressive and tensile forces are transmissible via the connection.

7. Lashing element according to Claim 5 or 6, **characterized in that** the threaded-rod portion (28) has a receptacle (33) for a connecting element (31) of the lashing-rod portion (29), preferably a projection (31) at the rear end of the lashing-rod portion (29).

8. Lashing element according to Claim 7, **characterized in that** the receptacle (33) is lockable with respect to the connecting element (31) by way of a locking element (34, 52).

9. Lashing system for vertically securing a container (100) or a stack (110) of at least two containers (100) arranged one above the other to an anchor point (40), in particular on board a ship, having at least two lashing elements (10) according to one of Claims 1 to 8 and at least two anchor points (40) on at least one surface, such as for example a deck, a hatch cover or a lashing bridge.

10. Lashing system according to Claim 9, **characterized in that** at least one of the two anchor points (40) is provided on at least one podium (43) on the at least one surface.

11. Lashing system according to Claim 9 or 10, **characterized in that** the at least one anchor point (40) on the podium (43) is arranged in a displaceable manner.

12. Lashing system according to one of Claims 9 to 11, **characterized in that**, proceeding from the anchor points, the lashing elements (10) are arranged upwards or downwards.

13. Lashing system according to one of Claims 9 to 11, **characterized in that** the anchor points are arranged centrally with respect to the container (100) to be secured so that, preferably, the lashing elements (10) are arranged so as not to cross between the anchor points (40) and the corner fittings (120) of the container (100).

14. Lashing system according to one of Claims 9 to 11, **characterized in that** the anchor points are arranged at the outside with respect to the container (100) to be secured so that, preferably, the lashing elements (10) are arranged so as to cross between the anchor points (40) and the corner fittings (120) of the container (100).

## Revendications

1. Élément d'arrimage (10) pour relier verticalement un conteneur (100) ou une pile (110) d'au moins deux conteneurs (100) agencés l'un au-dessus de l'autre à une butée (40) sur une surface, notamment à bord d'un navire, avec au moins un élément (24) pour établir une liaison mobile amovible avec la butée (40), avec au moins un élément (18) pour établir une liaison amovible avec une ferrure de coin (120) du conteneur (100), avec au moins un élément (12) pour modifier une longueur de l'élément d'arrimage (10) pour adapter la longueur de l'élément d'arrimage (10) et pour tendre l'élément d'arrimage entre le coin de conteneur (120) et la butée (40), **caractérisé en ce qu'**une liaison résistante à la pression et à la traction existe entre l'au moins un élément (24) pour établir une liaison mobile amovible avec la butée (40) et l'au moins un élément (18) pour établir une liaison amovible avec une ferrure de coin (120) du conteneur (100), **en ce que** l'au moins un élément (18) pour établir une liaison amovible avec une ferrure d'angle (120) du conteneur (100) consiste en une ferrure d'arrimage (18), **en ce que** la ferrure d'arrimage (18) présente une tête rotative (19) qui est agencée de manière mobile, de façon à pouvoir pivoter autour d'un axe de rotation (38), par rapport à une section de tige (35) de la tige d'arrimage (11), **en ce que** la ferrure d'arrimage (18) présente un élément conique rotatif (20) destiné à s'engager dans une ouverture (121) de la ferrure de coin (120) du conteneur (100) pour établir une liaison par complémentarité de forme, l'élément conique (20) étant agencé de manière rotative sur la tête rotative (19), **en ce que** la ferrure d'arrimage (18) présente un élément d'insertion (23) qui peut être inséré dans l'ouverture (121) de la ferrure de coin (120) du conteneur (100), **en ce que** l'élément d'insertion (23) présente la dimension de l'ouverture (121) de la ferrure de coin (120) du conteneur (100), de telle sorte qu'après l'insertion de l'élément d'insertion (23) dans l'ouverture, il existe une liaison par complémentarité de forme dans le plan de l'ouverture (121), et **en ce que** l'élément d'insertion (23) est agencé entre l'élément conique (20) et la tête rotative (19).

2. Élément d'arrimage selon la revendication 1, **caractérisé en ce qu'**au moins un élément (12) pour modifier une longueur de l'élément d'arrimage (10) consiste en un élément de vis (12), de préférence en une vis de serrage.

3. Élément d'arrimage selon la revendication 1 ou 2, **caractérisé en ce que** l'élément de vis (12) présente au moins une ouverture (16, 17), de préférence deux ouvertures, qui est pourvue d'un filetage dans lequel une section filetée (14, 15) d'une tige d'arrimage (11) ou d'une tige de liaison (13) peut être vissée et dévissée.

4. Élément d'arrimage selon l'une quelconque des revendications 1 à 3, **caractérisé en ce que** l'au moins un élément (24) pour établir une liaison mobile amovible avec la butée (40) consiste en un élément à bille (30) ou un logement pour un élément à bille.

5. Élément d'arrimage selon l'une quelconque des revendications 1 à 4, **caractérisé en ce que** l'élément d'arrimage (11) présente une section de tige filetée (28) et une section de tige d'arrimage (29) qui sont reliées l'une à l'autre de manière amovible.

6. Élément d'arrimage selon la revendication 5, **caractérisé en ce que** la liaison entre la section de tige filetée (28) et une section de tige d'arrimage (29) est réalisée de telle sorte que des forces de compression et de traction peuvent être transmises par la liaison.

7. Élément d'arrimage selon la revendication 5 ou 6, **caractérisé en ce que** la section de tige filetée (28) présente un logement (33) pour un élément de liaison (31) de la section de tige d'arrimage (29), de préférence une saillie (31) à l'extrémité arrière de la section de tige d'arrimage (29).

8. Élément d'arrimage selon la revendication 7, **caractérisé en ce que** le logement (33) peut être verrouillé par rapport à l'élément de liaison (31) avec un élément de verrouillage (34, 52).

9. Système d'arrimage pour sécuriser verticalement un conteneur (100) ou une pile (110) d'au moins deux conteneurs (100) agencés l'un au-dessus de l'autre à une butée (40), notamment à bord d'un navire, avec au moins deux éléments d'arrimage (10) selon l'une quelconque des revendications 1 à 8 et au moins deux butées (40) sur au moins une surface telle qu'un pont, un panneau d'écoutille ou un pont d'arrimage.

10. Système d'arrimage selon la revendication 9, **caractérisé en ce qu'**au moins l'une des deux butées (40) est prévue sur au moins une plate-forme (43) sur l'au moins une surface.

11. Système d'arrimage selon la revendication 9 ou 10, **caractérisé en ce que** l'au moins une butée (40) est agencée de manière coulissante sur la plate-forme (43).

12. Système d'arrimage selon l'une quelconque des revendications 9 à 11, **caractérisé en ce que** les éléments d'arrimage (10) sont agencés vers le haut ou vers le bas à partir des butées.

13. Système d'arrimage selon l'une quelconque des revendications 9 à 11, **caractérisé en ce que** les butées sont agencées au centre par rapport au conteneur (100) à sécuriser, de telle sorte que, de préférence, les éléments d'arrimage (10) sont agencés en ne se croisant pas entre les butées (40) et les ferrures de coin (120) du conteneur (100).

14. Système d'arrimage selon l'une quelconque des revendications 9 à 11, **caractérisé en ce que** les butées sont agencées à l'extérieur par rapport au conteneur (100) à sécuriser, de telle sorte que, de préférence, les éléments d'arrimage (10) sont agencés en se croisant entre les butées (40) et les ferrures de coin (120) du conteneur (100).
